(19) Europäisches Patentamt
European Patent Office
Office européen des brevets

(11) EP 2 955 885 A1

(12) EUROPEAN PATENT APPLICATION

(43) Date of publication:
16.12.2015 Bulletin 2015/51

(51) Int Cl.:
H04L 12/707 (2013.01)          H04L 12/725 (2013.01)
H04L 12/723 (2013.01)          H04L 12/721 (2013.01)
H04L 12/26 (2006.01)

(21) Application number: 15162931.8

(22) Date of filing: 09.04.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 14.04.2014 CN 201410147654

(71) Applicant: Huawei Technologies Co., Ltd.
Longgang District
Shenzhen, Guangdong 518129 (CN)

(72) Inventors:
• Sun, Changsheng
518129, P.R. Shenzhen (CN)
• Yuan, Yulin
518129, P.R. Shenzhen (CN)
• Liu, Xiaogang
518129, P.R. Shenzhen (CN)

(74) Representative: Lord, Michael
Gill Jennings & Every LLP
The Broadgate Tower
20 Primrose Street
London EC2A 2ES (GB)

(54) **METHOD AND APPARATUS FOR DETERMINING TRAFFIC FORWARDING PATH AND COMMUNICATIONS SYSTEM**

(57) The present invention discloses a method and an apparatus for determining a traffic forwarding path and a communications system, and belongs to the field of communications technologies. The method includes: acquiring, by a first network node, link quality information of each link in a first autonomous system, where the first network node is a network node in the first autonomous system, the link quality information of each link includes an individual link quality index of each link, or, the link quality information of each link includes an index reference value calculated according to the individual link quality index of each link, where the link quality index includes one or more dynamic link quality indexes; and determining, according to the currently acquired link quality information of each link in the first autonomous system, a path used by the first network node to forward traffic to each second network node, where the second network node is a network node other than the first network node in the first autonomous system. The present invention has relatively good network adaptability.

FIG. 1

EP 2 955 885 A1

**Description**

TECHNICAL FIELD

The present invention relates to the field of communications technologies, and in particular, to a method and an apparatus for determining a traffic forwarding path and a communications system.

BACKGROUND

With the rapid development of IP (Internet Protocol, Internet Protocol) networks, the IP networks play an increasingly important role in telecommunications networks and are widely used for softswitch network bearers, IMS (IP Multimedia Subsystem, IP Multimedia Subsystem) network bearers, key account service bearers, wireless backhaul bearers and so on. In the IP networks, a traffic forwarding path is usually determined by using a dynamic routing protocol, for example, the OSPF (Open Shortest Path First, Open Shortest Path First) protocol, the ISIS (Intermediate System to Intermediate System, Intermediate System to Intermediate System) protocol, the CSPF (Constrained Shortest Path First, Constrained Shortest Path First) protocol, or the BGP (Border Gateway Protocol, Border Gateway Protocol).

Using the OSPF protocol as an example, an existing method for determining a traffic forwarding path includes: generating, by each network node in a network, an individual LSA (Link State Advertisement, link state advertisement), where the LSA of each network node separately includes a cost (cost) value of a link by using which the network node forwards traffic to a neighboring node, and a neighboring node of a network node is a network node interconnected to the network node; flooding the LSAs of the network nodes in the entire network, so that each network node obtains the LSAs of all the network nodes in the network, and generating an LSDB (Link State Database, link state database) according to the LSAs of all the network nodes; and separately performing, by each network node, path calculation on the LSDB according to an SPF (Shortest Path First, shortest path first) algorithm, and determining a path used by each network node to forward traffic to another network node.

In the prior art, a path used for forwarding traffic is calculated according to a cost value in an LSDB. Because the cost value is constant, an optimal path obtained according to the cost value is also constant. Traffic can only be forwarded according to a fixed path; even if a quality fault occurs in a link, a path for forwarding traffic forwarded by using the link is not changed, and the link is still used for forwarding, resulting in a failure in traffic forwarding and poor network adaptability.

SUMMARY

To solve a problem of poor network adaptability in the prior art, embodiments of the present invention provide a method and an apparatus for determining a traffic forwarding path, and a system. The technical solutions are as follows:

According to a first aspect, an embodiment of the present invention provides a method for determining a traffic forwarding path, where the method includes:

acquiring, by a first network node, link quality information of each link in a first autonomous system, where the first network node is a network node in the first autonomous system, the link quality information of each link includes an individual link quality index of each link, or, the link quality information of each link includes an index reference value calculated according to the individual link quality index of each link, where the link quality index includes one or more dynamic link quality indexes; and

determining, according to the currently acquired link quality information of each link in the first autonomous system, a path used by the first network node to forward traffic to each second network node, where the second network node is a network node other than the first network node in the first autonomous system.

Optionally, the dynamic link quality index includes a remaining bandwidth, a packet error rate, a packet loss rate, a delay, and a jitter.

In a first possible implementation manner of the first aspect, the link quality index further includes one or more static link quality indexes, the static link quality index includes a cost value and a bandwidth, and the cost value is used for representing a quantity of consumable resources of a link.

In a second possible implementation manner of the first aspect, the index reference value of each link is calculated by using the following method:

selecting, from multiple link quality indexes, a link quality index as a datum for conversion;
converting other link quality indexes of the multiple link quality indexes according to the datum; and

calculating, according to configured weights, a weighted sum of the link quality index serving as the datum for conversion and the converted other link quality indexes, so as to obtain the index reference value of each link.

Optionally, the method further includes:

acquiring the configured weights, where weights corresponding to some of the multiple link quality indexes are 0 or none of weights corresponding to the multiple link quality indexes is 0.

In a third possible implementation manner of the first aspect, the acquiring link quality information of each link in a first autonomous system includes:

acquiring the link quality information of a link used by the first network node to forward traffic; and
receiving a link state advertisement or link state packet sent by a neighboring node of the first network node, where the link state advertisement or link state packet sent by the neighboring node of the first network node includes any one or two of the following: the link quality information, which is currently acquired by the neighboring node of the first network node, of a link used by the neighboring node of the first network node to forward traffic, and the link quality information, which is currently acquired by other network nodes, of links used by the other network nodes to forward traffic, and the other network nodes are network nodes other than the first network node and the neighboring node of the first network node in the first autonomous system.

Optionally, the method further includes:

sending a link state advertisement or link state packet to the neighboring node of the first network node, where the link state advertisement or link state packet sent by the first network node includes any one or two of the following: the link quality information, which is currently acquired by the first network node, of the link used by the first network node to forward traffic, and the link quality information, which is currently acquired by the other network nodes, of the links used by the other network nodes to forward traffic.

Optionally, the sending a link state advertisement or link state packet to the neighboring node of the first network node includes:

sending the link state advertisement or link state packet to the neighboring node of the first network node at intervals of a set time.

Optionally, when an absolute value of a difference between the currently acquired link quality information of the link used by the first network node to forward traffic and the link quality information, which is acquired last time, of the link used by the first network node to forward traffic is less than or equal to a first preset value, the link state advertisement or link state packet further includes an omission mark, where the omission mark is used for instructing the neighboring node of the first network node to discard the link state advertisement or link state packet sent by the first network node, the first preset value equals a product of multiplying a set ratio by the link quality information, which is acquired last time, of the link used by the first network node to forward traffic, and the set ratio is greater than 0 and less than 1.

Optionally, the sending the link state advertisement or link state packet to the neighboring node of the first network node includes:

within the set time, when an absolute value of a difference between the currently acquired link quality information of the link used by the first network node to forward traffic and the link quality information, which is acquired last time, of the link used by the first network node to forward traffic is greater than a second preset value, sending the link state advertisement or link state packet to the neighboring node of the first network node, where the second preset value equals a product of multiplying a set ratio by the link quality information, which is acquired last time, of the link used by the first network node to forward traffic, and the set ratio is greater than 0 and less than 1.

In a fourth possible implementation manner of the first aspect, the determining, according to the currently acquired link quality information of each link in the first autonomous system, a path used by the first network node to forward traffic to each second network node includes:

when an absolute value of a difference between the currently acquired link quality information of the link in the first autonomous system and the link quality information, which is acquired last time, of the link in the first autonomous system is greater than a third preset value, calculating, according to the currently acquired link quality information of each link in the first autonomous system, the path used by the first network node to forward traffic to each second network node, where the third preset value equals a product of multiplying a set ratio by the link quality information, which is acquired last time, of the link in the first autonomous system, and the set ratio is greater than 0 and less than 1.

In a fifth possible implementation manner of the first aspect, the method further includes:

determining a forwarding entry of the first network node according to the path used by the first network node to forward traffic to each second network node, where the forwarding entry includes a next-hop network node of the first network node in the path used by the first network node to forward traffic to each second network node.

Optionally, the determining a forwarding entry of the first network node according to the path used by the first network node to forward traffic to each second network node includes:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, determining the forwarding entry of the first network node according to the currently determined path used by the first network node to forward traffic to each second network node, where the path quality information is a sum of the index reference values of the links forming the path, the fourth preset value equals a product of multiplying a set ratio by the path quality information of the path that is determined last time and is used by the first network node to forward traffic to each second network node, and the set ratio is greater than 0 and less than 1.

In a sixth possible implementation manner of the first aspect, the method further includes:

before the determining, according to the currently acquired link quality information of each link in the first autonomous system, a path used by the first network node to forward traffic to each second network node, filtering, based on a constraint of the link quality information, the currently acquired link quality information of each link in the first autonomous system.

In a seventh possible implementation manner of the first aspect, the method further includes:

after the determining, according to the currently acquired link quality information of each link in the first autonomous system, a path used by the first network node to forward traffic to each second network node, the method further includes:

determining whether path quality information of the path used by the first network node to forward traffic to each second network node meets a constraint of the path quality information, where the path quality information is a sum of the index reference values of the links forming the path; and
determining a forwarding entry of the first network node according to the path, of which path quality information meets the constraint of the path quality information, used by the first network node to forward traffic to each second network node, where the forwarding entry includes a next-hop network node of the first network node in the path used by the first network node to forward traffic to each second network node.

In an eighth possible implementation manner of the first aspect, when the first network node is an edge node in the first autonomous system, the method further includes:

receiving Border Gateway Protocol BGP routing information sent by an edge node in a second autonomous system, where the BGP routing information sent by the edge node of the second autonomous system includes path quality information of a path used by the edge node of the second autonomous system to forward traffic to each third network node, the edge node in the second autonomous system is connected to the first network node, the third network node is a network node, other than the edge node in the second autonomous system, in the second autonomous system, and the path quality information is a sum of the index reference values of links forming the path; and
determining, according to the path quality information of the path used by the edge node of the second autonomous system to forward traffic to each third network node, a path used to forward traffic from the first network node to the third network node.

Optionally, the method further includes:

sending BGP routing information to the edge node in the second autonomous system, where the BGP routing information sent by the first network node includes path quality information of the path used by the first network node to forward traffic to each second network node.

According to a second aspect, an embodiment of the present invention provides a method for determining a traffic forwarding path, where the method includes:

acquiring, by a network management device, link quality information of each link in a first autonomous system, where the link quality information of each link includes an individual link quality index of each link, or, the link quality information of each link includes an index reference value calculated according to the individual link quality index of each link, where the link quality index includes one or more dynamic link quality indexes; and
determining, according to the currently acquired link quality information of each link in the first autonomous system, a path used by each network node in the first autonomous system to forward traffic in the first autonomous system.

Optionally, the dynamic link quality index includes a remaining bandwidth, a packet error rate, a packet loss rate, a delay, and a jitter.
In a first possible implementation manner of the second aspect, the link quality index further includes one or more static link quality indexes, the static link quality index includes a cost value and a bandwidth, and the cost value is used for representing a quantity of consumable resources of a link.
In a second possible implementation manner of the second aspect, the acquiring link quality information of each link in a first autonomous system includes:

when a link state advertisement or link state packet sent by a network node in the first autonomous system includes the dynamic link quality index, acquiring, from the network node in the first autonomous system, the dynamic link quality index of each link in the first autonomous system; or,
detecting the dynamic link quality index of each link in the first autonomous system.

Optionally, when the link quality index further includes one or more static link quality indexes, the acquiring link quality information of each link in a first autonomous system further includes:

acquiring, from the network node in the first autonomous system, the static link quality index of each link in the first autonomous system; or,
acquiring the static link quality index, which is stored in the network management device, of each link in the first autonomous system.

In a third possible implementation manner of the second aspect, the method includes: acquiring, by the network management device, the link quality information of each link in the first autonomous system, where the link quality information of each link includes the individual link quality index of each link, or, the link quality information of each link includes the index reference value calculated according to the individual link quality index of each link, where the link quality index includes one or more dynamic link quality indexes; and
determining, according to the currently acquired link quality information of each link in the first autonomous system, a path used by each network node in the first autonomous system to forward traffic in the first autonomous system.
Optionally, the method further includes:

acquiring configured weights, where weights corresponding to some of the multiple link quality indexes are 0 or none of weights corresponding to the multiple link quality indexes is 0.

In a fourth possible implementation manner of the second aspect, the determining, according to the currently acquired link quality information of each link in the first autonomous system, a path used by each network node in the first autonomous system to forward traffic in the first autonomous system includes:

when an absolute value of a difference between the currently acquired link quality information of each link in the first autonomous system and the link quality information, which is acquired last time, of each link in the first autonomous system is greater than a fifth preset value, calculating, according to the currently acquired link quality information of each link in the first autonomous system, the path used by each network node in the first autonomous system to forward traffic in the first autonomous system, where the fifth preset value equals a product of multiplying a set ratio by the link quality information, which is acquired last time, of each link in the first autonomous system, and the set ratio is greater than 0 and less than 1.

In a fifth possible implementation manner of the second aspect, the method further includes:

outputting the path used by each network node in the first autonomous system to forward traffic in the first autonomous system as a reference for configuring an actual path used by each network node in the first autonomous system to forward traffic in the first autonomous system.

Optionally, the method further includes:

outputting path quality information of the path used by each network node in the first autonomous system to forward traffic in the first autonomous system, where the path quality information is a sum of the index reference values of the links forming the path.

Optionally, the outputting the path used by each network node in the first autonomous system to forward traffic in the first autonomous system as a reference for configuring an actual path used by each network node in the first autonomous system to forward traffic includes:

when an absolute value of a difference between path quality information of the currently determined path that is used by each network node in the first autonomous system to forward traffic in the first autonomous system and path quality information of the path that is determined last time and is used by each network node in the first autonomous system to forward traffic in the first autonomous system is greater than a sixth preset value, outputting the path used by each network node in the first autonomous system to forward traffic in the first autonomous system as the reference for configuring the actual path used by each network node in the first autonomous system to forward traffic, where the path quality information is a sum of the index reference values of the links forming the path, the sixth preset value is greater than a product of multiplying a set ratio by the path quality information of the path that is determined last time and is used by each network node in the first autonomous system to forward traffic in the first autonomous system, and the set ratio is greater than 0 and less than 1.

In a sixth possible implementation manner of the second aspect, the method further includes:

before the determining, according to the currently acquired link quality information of each link in the first autonomous system, a path used by each network node in the first autonomous system to forward traffic in the first autonomous system, filtering, according to a constraint of the link quality information, the link quality information of each link in the first autonomous system.

In a seventh possible implementation manner of the second aspect, the method further includes:

after the determining, according to the currently acquired link quality information of each link in the first autonomous system, a path used by each network node in the first autonomous system to forward traffic in the first autonomous system, determining whether path quality information of the path used by each network node in the first autonomous system to forward traffic in the first autonomous system meets a constraint of the path quality information, where the path quality information is a sum of the index reference values of the links forming the path; and
determining, according to the path, of which path quality information meets the constraint of the path quality information, used by a first network node to forward traffic to each second network node, a forwarding entry of the first network node, where the forwarding entry includes a network node, which directly receives traffic sent by the first network node, in the path used by the first network node to forward traffic to each second network node.

In an eighth possible implementation manner of the second aspect, the method further includes:

acquiring link quality information of each link in a second autonomous system; and
determining, according to the currently acquired link quality information of each link in the second autonomous system, a path used by each network node in the first autonomous system to forward traffic to a network node in the second autonomous system.

According to a third aspect, an embodiment of the present invention provides an apparatus for determining a traffic forwarding path, where the apparatus is disposed on a first network node, the first network node is a network node in a first autonomous system, and the apparatus includes:

an information acquiring module, configured to acquire link quality information of each link in the first autonomous system, where the first network node is a network node in the first autonomous system, the link quality information of each link includes an individual link quality index of each link, or, the link quality information of each link includes an index reference value calculated according to the individual link quality index of each link, where the link quality index includes one or more dynamic link quality indexes; and
a path determining module, configured to determine, according to the currently acquired link quality information of each link in the first autonomous system, a path used by the first network node to forward traffic to each second network node, where the second network node is a network node other than the first network node in the first autonomous system.

Optionally, the dynamic link quality index includes a remaining bandwidth, a packet error rate, a packet loss rate, a delay, and a jitter.

In a first possible implementation manner of the third aspect, the link quality index further includes one or more static link quality indexes, the static link quality index includes a cost value and a bandwidth, and the cost value is used for representing a quantity of consumable resources of a link.

In a second possible implementation manner of the third aspect, the information acquiring module or the path determining module is configured to:

select, from multiple link quality indexes, a link quality index as a datum for conversion;
convert other link quality indexes of the multiple link quality indexes according to the datum; and
calculate, according to configured weights, a weighted sum of the link quality index serving as the datum for conversion and the converted other link quality indexes, so as to obtain the index reference value of each link.

Optionally, the apparatus further includes:

a weight acquiring module, configured to acquire the configured weights, where weights corresponding to some of the multiple link quality indexes are 0 or none of weights corresponding to the multiple link quality indexes is 0.

In a third possible implementation manner of the third aspect, the information acquiring module includes:

an acquiring unit, configured to acquire the link quality information of a link used by the first network node to forward traffic; and
a receiving unit, configured to receive a link state advertisement or link state packet sent by a neighboring node of the first network node, where the link state advertisement or link state packet sent by the neighboring node of the first network node includes any one or two of the following: the link quality information, which is currently acquired by the neighboring node of the first network node, of a link used by the neighboring node of the first network node to forward traffic, and the link quality information, which is currently acquired by other network nodes, of links used by the other network nodes to forward traffic, and the other network nodes are network nodes other than the first network node and the neighboring node of the first network node in the first autonomous system.

Optionally, the apparatus further includes:

a sending unit, configured to send a link state advertisement or link state packet to the neighboring node of the first network node, where the link state advertisement or link state packet sent by the first network node includes any one or two of the following: the link quality information, which is currently acquired by the first network node, of the link used by the first network node to forward traffic, and the link quality information, which is currently acquired by the other network nodes, of the links used by the other network nodes to forward traffic.

Optionally, the sending unit is configured to:

send the link state advertisement or link state packet to the neighboring node of the first network node at intervals of a set time.

Optionally, when an absolute value of a difference between the currently acquired link quality information of the link used by the first network node to forward traffic and the link quality information, which is acquired last time, of the link used by the first network node to forward traffic is less than or equal to a first preset value, the link state advertisement or link state packet further includes an omission mark, where the omission mark is used for instructing the neighboring node of the first network node to discard the link state advertisement or link state packet sent by the first network node, the first preset value equals a product of multiplying a set ratio by the link quality information, which is acquired last time, of the link used by the first network node to forward traffic, and the set ratio is greater than 0 and less than 1.

Optionally, the sending unit is further configured to:

within the set time, when an absolute value of a difference between the currently acquired link quality information of the link used by the first network node to forward traffic and the link quality information, which is acquired last time, of the link used by the first network node to forward traffic is greater than a second preset value, send the link state advertisement or link state packet to the neighboring node of the first network node, where the second preset value equals a product of multiplying a set ratio by the link quality information, which is acquired last time, of the link used by the first network node to forward traffic, and the set ratio is greater than 0 and less than 1.

In a fourth possible implementation manner of the third aspect, the path determining module is configured to:

when an absolute value of a difference between the currently acquired link quality information of the link in the first autonomous system and the link quality information, which is acquired last time, of the link in the first autonomous system is greater than a third preset value, calculate, according to the currently acquired link quality information of each link in the first autonomous system, the path used by the first network node to forward traffic to each second network node, where the third preset value equals a product of multiplying a set ratio by the link quality information, which is acquired last time, of the link in the first autonomous system, and the set ratio is greater than 0 and less than 1.

In a fifth possible implementation manner of the third aspect, the apparatus further includes:

a forwarding entry determining module, configured to determine a forwarding entry of the first network node according to the path used by the first network node to forward traffic to each second network node, where the forwarding entry includes a next-hop network node of the first network node in the path used by the first network node to forward traffic to each second network node.

Optionally, the forwarding entry determining module is configured to:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, determine the forwarding entry of the first network node according to the currently determined path used by the first network node to forward traffic to each second network node, where the path quality information is a sum of the index reference values of the links forming the path, the fourth preset value equals a product of multiplying a set ratio by the path quality information of the path that is determined last time and is used by the first network node to forward traffic to each second network node, and the set ratio is greater than 0 and less than 1.

In a sixth possible implementation manner of the third aspect, the apparatus further includes:

an information filtering module, configured to: before the path used by the first network node to forward traffic to each second network node is determined according to the currently acquired link quality information of each link in the first autonomous system, filter, based on a constraint of the link quality information, the currently acquired link quality information of each link in the first autonomous system.

In a seventh possible implementation manner of the third aspect, the apparatus further includes:

a path judging module, configured to determine whether path quality information of the path used by the first network node to forward traffic to each second network node meets a constraint of the path quality information, where the path quality information is a sum of the index reference values of the links forming the path; and
a forwarding entry determining module, configured to determine a forwarding entry of the first network node according to the path, of which path quality information meets the constraint of the path quality information, used by the first network node to forward traffic to each second network node, where the forwarding entry includes a next-hop network node of the first network node in the path used by the first network node to forward traffic to each second network node.

In an eighth possible implementation manner of the third aspect, when the first network node is an edge node in the first autonomous system, the apparatus further includes:

a path receiving module, configured to receive Border Gateway Protocol BGP routing information sent by an edge node of a second autonomous system, where the BGP routing information sent by the edge node of the second autonomous system includes path quality information of a path used by the edge node of the second autonomous system to forward traffic to each third network node, the edge node in the second autonomous system is connected to the first network node, the third network node is a network node, other than the edge node in the second autonomous system, in the second autonomous system, and the path quality information is a sum of the index reference values of links forming the path, where
the path determining module is further configured to determine, according to the path quality information of the path used by the edge node of the second autonomous system to forward traffic to each third network node, a path used to forward traffic from the first network node to the third network node.

Optionally, the apparatus further includes:

a path sending module, configured to send BGP routing information to the edge node in the second autonomous system, where the BGP routing information sent by the first network node includes path quality information of the path used by the first network node to forward traffic to each second network node.

According to a fourth aspect, an embodiment of the present invention provides an apparatus for determining a traffic forwarding path, where the apparatus is disposed on a network management device, and the apparatus includes:

an information acquiring module, configured to acquire link quality information of each link in a first autonomous system, where the link quality information of each link includes an individual link quality index of each link, or, the link quality information of each link includes an index reference value calculated according to the individual link quality index of each link, where the link quality index includes one or more dynamic link quality indexes; and
a path determining module, configured to determine, according to the currently acquired link quality information of each link in the first autonomous system, a path used by each network node in the first autonomous system to forward traffic in the first autonomous system.

Optionally, the dynamic link quality index includes a remaining bandwidth, a packet error rate, a packet loss rate, a delay, and a jitter.

In a first possible implementation manner of the forth aspect, the link quality index further includes one or more static link quality indexes, and the static link quality index includes a cost value and a bandwidth.

In a second possible implementation manner of the forth aspect, the information acquiring module is configured to:

when a link state advertisement or link state packet sent by a network node in the first autonomous system includes the dynamic link quality index, acquire, from the network node in the first autonomous system, the dynamic link quality index of each link in the first autonomous system; or,
detect the dynamic link quality index of each link in the first autonomous system.

Optionally, when the link quality index further includes one or more static link quality indexes, the information acquiring module is further configured to:

acquire, from the network node in the first autonomous system, the static link quality index of each link in the first autonomous system; or,
acquire the static link quality index, which is stored in the network management device, of each link in the first autonomous system.

In a third possible implementation manner of the forth aspect, the path determining module is configured to:

select, from multiple link quality indexes, a link quality index as a datum for conversion;
convert other link quality indexes of the multiple link quality indexes according to the datum;
calculate, according to configured weights, a weighted sum of the link quality index serving as the datum for conversion and the converted other link quality indexes, so as to obtain the index reference value of each link; and
calculate, according to the index reference value of each link, the path used by each network node to forward traffic in the first autonomous system.

Optionally, the apparatus further includes:

a weight acquiring module, configured to acquire the configured weights, where weights corresponding to some of the multiple link quality indexes are 0 or none of weights corresponding to the multiple link quality indexes is 0.

In a fourth possible implementation manner of the forth aspect, the path determining module is configured to:

when an absolute value of a difference between the currently acquired link quality information of each link in the first autonomous system and the link quality information, which is acquired last time, of each link in the first autonomous system is greater than a fifth preset value, calculate, according to the currently acquired link quality information of each link in the first autonomous system, the path used by each network node in the first autonomous system to forward traffic in the first autonomous system, where the fifth preset value equals a product of multiplying a set ratio by the link quality information, which is acquired last time, of each link in the first autonomous system, and the set ratio is greater than 0 and less than 1.

In a fifth possible implementation manner of the forth aspect, the apparatus further includes:

a path output module, configured to output the path used by each network node in the first autonomous system to forward traffic in the first autonomous system as a reference for configuring an actual path used by each network node in the first autonomous system to forward traffic in the first autonomous system.

Optionally, the path output module is further configured to:

output path quality information of the path used by each network node in the first autonomous system to forward traffic in the first autonomous system, where the path quality information is a sum of the index reference values of the links forming the path.

Optionally, the path output module is configured to:

when an absolute value of a difference between path quality information of the currently determined path that is used by each network node in the first autonomous system to forward traffic in the first autonomous system and path quality information of the path that is determined last time and is used by each network node in the first autonomous system to forward traffic in the first autonomous system is greater than a sixth preset value, output the path used by each network node in the first autonomous system to forward traffic in the first autonomous system as the reference for configuring the actual path used by each network node in the first autonomous system to forward traffic, where the path quality information is a sum of the index reference values of the links forming the path, the sixth preset value is greater than a product of multiplying a set ratio by the path quality information of the path that is determined last time and is used by each network node in the first autonomous system to forward traffic in the first autonomous system, and the set ratio is greater than 0 and less than 1.

In a sixth possible implementation manner of the forth aspect, the apparatus further includes:

an information filtering module, configured to: before a path used by each network node in the first autonomous system to forward traffic in the first autonomous system is determined according to the currently acquired link quality information of each link in the first autonomous system, filter, according to a constraint of the link quality information, the link quality information of each link in the first autonomous system.

In a seventh possible implementation manner of the forth aspect, the apparatus further includes:

a path judging module, configured to: after a path used by each network node in the first autonomous system to forward traffic in the first autonomous system is determined according to the currently acquired link quality information of each link in the first autonomous system, determine whether path quality information of the path used by each network node in the first autonomous system to forward traffic in the first autonomous system meets a constraint of the path quality information, where the path quality information is a sum of the index reference values of the links forming the path; and
a forwarding entry determining module, configured to determine, according to the path, of which path quality information meets the constraint of the path quality information, used by a first network node to forward traffic to each second network node, a forwarding entry of the first network node, where the forwarding entry includes a network node, which directly receives traffic sent by the first network node, in the path used by the first network node to forward traffic to each second network node.

In an eighth possible implementation manner of the forth aspect, the information acquiring module is further configured to:

acquire link quality information of each link in a second autonomous system; and
determine, according to the currently acquired link quality information of each link in the second autonomous system, a path used by each network node in the first autonomous system to forward traffic to a network node in the second autonomous system.

According to a fifth aspect, an embodiment of the present invention provides a communications system, where the system includes at least two network nodes, and the apparatus in the third aspect is disposed on the network node.
According to a sixth aspect, an embodiment of the present invention provides a communications system, where the system includes a network management device and multiple network nodes, and the apparatus in the fourth aspect is disposed on the network management device.
The technical solutions provided in the embodiments of the present invention bring the following beneficial effects:

Link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a diagram of an application scenario of a method for acquiring an optimal path according to an embodiment of the present invention;
FIG. 2 is a flowchart of a path determining method according to Embodiment 1 of the present invention;
FIG. 3 is a flowchart of a path determining method according to Embodiment 2 of the present invention;
FIG. 4 is a flowchart of a path determining method according to Embodiment 3 of the present invention;
FIG. 5 is a flowchart of a path determining method according to Embodiment 4 of the present invention;
FIG. 6 is a flowchart of a path determining method according to Embodiment 5 of the present invention;
FIG. 7 is a flowchart of a path determining method according to Embodiment 6 of the present invention;
FIG. 8 is a flowchart of a path determining method according to Embodiment 7 of the present invention;
FIG. 9 is a schematic structural diagram of a path determining apparatus according to Embodiment 8 of the present invention;
FIG. 10 is a schematic structural diagram of a path determining apparatus according to Embodiment 9 of the present invention;
FIG. 11 is a schematic structural diagram of a path determining apparatus according to Embodiment 10 of the present invention;
FIG. 12 is a schematic structural diagram of a path determining apparatus according to Embodiment 11 of the present invention;

FIG. 13 is a structural diagram of hardware of a path determining apparatus according to Embodiment 12 of the present invention;

FIG. 14 is a schematic structural diagram of a path determining apparatus according to Embodiment 13 of the present invention;

FIG. 15 is a schematic structural diagram of a path determining apparatus according to Embodiment 14 of the present invention;

FIG. 16 is a structural diagram of hardware of a path determining apparatus according to Embodiment 15 of the present invention;

FIG. 17 is a schematic structural diagram of a communications system according to Embodiment 16 of the present invention; and

FIG. 18 is a schematic structural diagram of a communications system according to Embodiment 17 of the present invention.

DESCRIPTION OF EMBODIMENTS

To make the objectives, technical solutions, and advantages of the present invention clearer, the following further describes the embodiments of the present invention in detail with reference to the accompanying drawings.

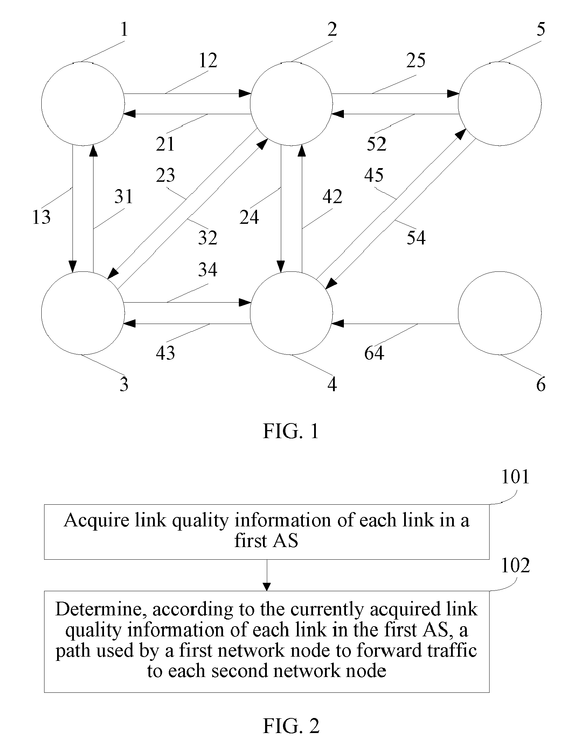

An application scenario of a method for acquiring an optimal path provided in an embodiment of the present invention is first briefly introduced below with reference to FIG. 1.

The present invention is applicable to a network in which a traffic forwarding path is determined by using a dynamic routing protocol. The network includes several network nodes (represented by circles) used to forward traffic, the network nodes are connected to each other, and a link (represented by a straight line with an arrow) used for forwarding traffic is provided between two network nodes that are connected to each other.

As shown in FIG. 1, a network shown in FIG. 1 includes six network nodes, namely, network nodes 1, 2, 3, 4, 5, and 6. For the network node 1, a link 12 used for forwarding traffic to the network node 2 and a link 13 used for forwarding traffic to the network node 3 are provided in the network. For the network node 2, a link 21 used for forwarding traffic to the network node 1, a link 23 used for forwarding traffic to the network node 3, a link 24 used for forwarding traffic to the network node 4, and a link 25 used for forwarding traffic to the network node 5 are provided in the network. For the network node 3, a link 31 used for forwarding traffic to the network node 1, a link 32 used for forwarding traffic to the network node 2, and a link 34 used for forwarding traffic to the network node 4 are provided in the network. For the network node 4, a link 42 used for forwarding traffic to the network node 2, a link 43 used for forwarding traffic to the network node 3, and a link 45 used for forwarding traffic to the network node 5 are provided in the network. For the network node 5, a link 52 used for forwarding traffic to the network node 2 and a link 54 used for forwarding traffic to the network node 4 are provided in the network. For the network node 6, a link 64 used for forwarding traffic to the network node 4 is provided in the network.

It should be noted that the number of network nodes, the number of links and connection relationships between the network nodes (links disposed between network nodes) shown in FIG. 1 are only exemplary, and the present invention is not limited thereto. In addition, a manner in which network nodes are connected to each other is not limited in the present invention. The manner in which the network nodes are connected to each other may be a wired connection by using an optical fiber, an electrical cable or the like, or may also be a wireless connection by using a radio wave. Furthermore, the type of a network node is also not limited in the present invention; for example, the type of a network node may include one or more of a router, a microwave device, an optical transmission device, a wireless base station, and a core network device. Moreover, the type of a network is also not limited in the present invention; for example, the type of a network may be an IP network, a transmission network or a microwave network. Finally, a dynamic routing protocol used in the network is also not limited in the present invention; for example, when a network has a small scale and network nodes are located in a same AS (Autonomous System, autonomous system), the OSPF protocol, the ISIS protocol or the CSPF protocol may be used in the network to determine a traffic forwarding path; when a network has a large scale, the network is divided into multiple ASs, and the BGP protocol may be used to determine a traffic forwarding path for network nodes between different ASs.

Embodiment 1

An embodiment of the present invention provides a method for determining a traffic forwarding path. The method may be executed by a first network node, and the first network node is a network node in a first AS. Referring to FIG. 2, the method includes:

Step 101: Acquire link quality information of each link in a first AS.
In this embodiment, the link quality information of each link includes an individual link quality index of each link (see Embodiment 2), or, the link quality information of each link includes an index reference value calculated according to the individual link quality index of each link (see Embodiment 3). The link quality index includes one or more dynamic link quality indexes.

Optionally, the link quality information may further include one or more static link quality indexes.

It should be noted that the dynamic link quality index is a link quality index that changes in real time according to a link condition, the static link quality index is a link quality index preconfigured with a set value, and the static link quality index stays unchanged when a link condition changes.

Step 102: Determine, according to the currently acquired link quality information of each link in the first AS, a path used by a first network node to forward traffic to each second network node.

In this embodiment, the second network node is a network node other than the first network node in the first AS.

In an actual application, a dynamic routing protocol used in the method may be the OSPF protocol or the ISIS protocol (see Embodiment 2 and Embodiment 3), a dynamic routing protocol used in the method may also be the CSPF protocol (see Embodiment 4), and a dynamic routing protocol used in the method may further be the BGP protocol (see Embodiment 5).

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 2

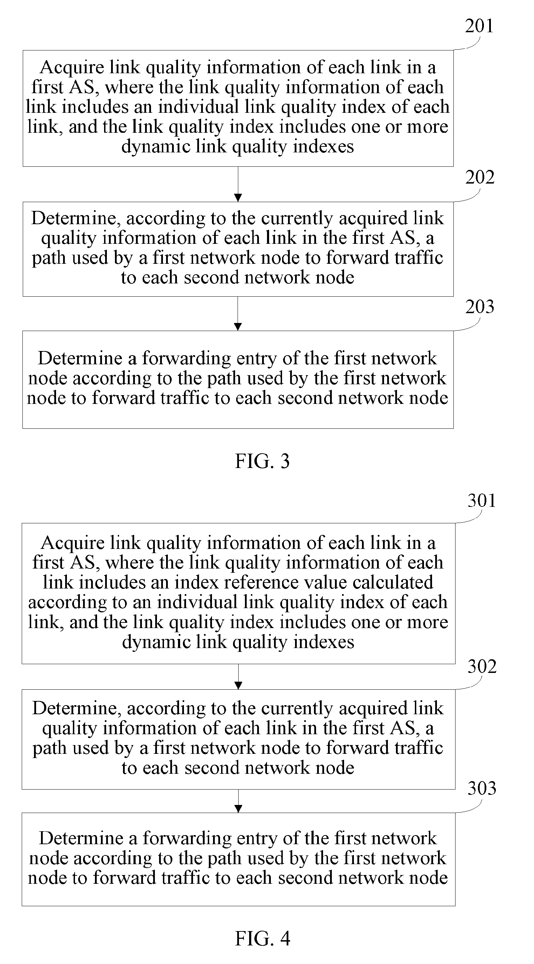

An example in which network nodes are in a same AS is used in this embodiment to describe a method for determining a traffic forwarding path of the present invention. An embodiment of the present invention provides a method for determining a traffic forwarding path, and the method may be executed by a first network node. In this embodiment, the first network node is any network node in a first AS, a dynamic routing protocol used for network nodes in the first AS may be the OSPF protocol or the ISIS protocol, link quality information of each link includes an individual link quality index of each link, and the link quality index includes one or more dynamic link quality indexes. Referring to FIG. 3, the method includes:

Step 201: Acquire link quality information of each link in a first AS, where the link quality information of each link includes an individual link quality index of each link, and the link quality index includes one or more dynamic link quality indexes.

Optionally, the dynamic link quality index may include a remaining bandwidth (bandwidth left), a packet error rate (error rate), a packet loss rate (lost rate), a delay (delay), and a jitter (a jitter). The dynamic link quality index may further include an extended dynamic link quality index such as a packet loss rate for an oversized packet (a packet exceeding 1500 bytes), and the present invention is not limited thereto.

Optionally, the link quality index may further include one or more static link quality indexes.

It should be noted that the dynamic link quality index is a link quality index that changes in real time according to a link condition, the static link quality index is a link quality index preconfigured with a set value, and the static link quality index stays unchanged when a link condition changes.

Optionally, the static link quality index may include a cost (cost) value and a bandwidth. The cost value is used for representing a quantity of consumable resources of a link.

For example, the link quality index may include a bandwidth, a remaining bandwidth, a packet error rate, a packet loss rate, a delay, and a jitter. For another example, the link quality index may include a cost value, a packet error rate, a packet loss rate, a delay, and a jitter.

Specifically, a cost value may be obtained according to a set correspondence between a cost value and a bandwidth (as shown in Table 1), or may also be a configured value.

Table 1

| Cost value | Interface bandwidth range |
| --- | --- |
| 60 | Interface bandwidth<10 Mbit/s |
| 50 | 10 Mbit/s<interface bandwidth<100 Mbit/s |
| 40 | 100 Mbit/s<interface bandwidth≤155 Mbit/s |
| 30 | 155 Mbit/s<interface bandwidth<622 Mbit/s |
| 20 | 622 Mbit/s<interface bandwidth<2.5 Gbit/s |
| 10 | 2.5 Gbit/s<interface bandwidth |

It should be noted that the correspondence between a cost value and a bandwidth shown in Table 1 is only exemplary, and the present invention is not limited thereto.

In an implementation manner of this embodiment, step 201 may include:

acquiring, by the first network node, the link quality information of a link used by the first network node to forward traffic, and sending an LSA or LSP (Link State Packet, link state packet) to a neighboring node of the first network node, where the LSA or LSP sent by the first network node includes the link quality information, which is currently acquired by the first network node, of the link used by the first network node to forward traffic, and the neighboring node of the first network node is a network node interconnected to the first network node; and

forwarding an LSA or LSP sent by the neighboring node of the first network node, where the LSA or LSP sent by the neighboring node of the first network node includes link quality information, which is currently acquired by the neighboring node of the first network node, of a link used by the neighboring node of the first network node to forward traffic, or link quality information, which is currently acquired by other network nodes, of links used by the other network nodes to forward traffic, or link quality information, which is currently acquired by the neighboring node of the first network node, of a link used by the neighboring node of the first network node to forward traffic and link quality information of links used by other network nodes to forward traffic, and the other network nodes are network nodes other than the first network node and the neighboring node of the first network node in the first AS.

In fact, the foregoing process is an existing flooding process. Each network node in the first AS separately sends an individual LSA or LSP to an individual neighboring node, and after receiving the LSA or LSP, the individual neighboring node further continues to send the LSA or LSP to a neighboring node of the individual neighboring node; in this way, the number of network nodes that receive LSAs or LSPs is gradually increased until all network nodes have received the LSAs or LSPs of all the network nodes.

It should be noted that in the OSPF protocol, an LSA carries link quality information, and in the ISIS protocol, an LSP carries link quality information.

In an actual application, the first network node may acquire the dynamic link quality index of the link used by the first network node to forward traffic by using an existing method, and the present invention is not limited thereto. For example, for a remaining bandwidth, a packet error rate, and a packet loss rate, the neighboring node of the first network node may perform measurement (the manner of measurement may be statistical counting) on traffic forwarded by the first network node, and after obtaining the remaining bandwidth, packet error rate, and packet loss rate of the link used by the first network node to forward traffic, the neighboring node of the first network node then sends, to the first network node, the remaining bandwidth, packet error rate, and packet loss rate of the link used by the first network node to forward traffic, where the neighboring node of the first network node is a network node connected (a manner of the connection may be a wired connection, or may also be a wireless connection) to the first network node. For another example, for a delay and a jitter, a protocol for detecting link quality, for example, the OAM (Operation Administration and Maintenance, Operation Administration and Maintenance) or the NQA (Network Quality Analyzer, Network Quality Analyzer) may be deployed on the first network node and the neighboring node of the first network node, or a protocol for detecting link quality, for example, the IPFPM (IP Flow Performance Measurement, IP Flow Performance Measurement) may be deployed on the neighboring node of the first network node, so as to obtain the delay and jitter of the link used by the first network node to forward traffic.

Specifically, when the dynamic link quality index of the link used by the first network node to forward traffic is detected by the neighboring node of the first network node, the neighboring node of the first network node may send, to the first network node by using an existing routing protocol packet (for example, a hello packet), the dynamic link quality index of the link used by the first network node to forward traffic; or may also send, to the first network node by using a defined new-type protocol packet, the dynamic link quality index of the link used by the first network node to forward traffic, which is not limited in the present invention.

Optionally, the neighboring node of the first network node may send, to the first network node at intervals of a set time, the dynamic link quality index of the link used by the first network node to forward traffic, or may also send, when the currently detected dynamic link quality index of the link used by the first network node to forward traffic exceeds a set range (for example, an absolute value of a difference between the currently detected dynamic link quality index of the link used by the first network node to forward traffic and a dynamic link quality index, which is detected last time, of the link used by the first network node to forward traffic exceeds a set ratio, for example, 10% of the dynamic link quality index, which is detected last time, of the link used by the first network node to forward traffic), to the first network node, the dynamic link quality index of the link used by the first network node to forward traffic, and the present invention is not limited thereto.

The static link quality index of the link used by the first network node to forward traffic may be directly acquired from a memory of the first network node.

During specific implementation, each network node may extend a link quality index in an LSA or LSP in a TLV (Type Length Value, type length value) extension manner, or may also extend a link quality index in an LSA or LSP in other extension manners.

For example, the link quality index includes a remaining bandwidth, a packet error rate, a packet loss rate, a delay, and a jitter, and according to a TLV encoding manner, the remaining bandwidth, packet error rate, packet loss rate, delay, and jitter may be extended as 5 TLVs into an existing LSA or LSP.

Further, when the LSAs or LSPs sent by all the network nodes in the first AS are acquired, the LSAs or LSPs sent by all the network nodes in the first AS may be formed into an LSDB (Link State Database, link state database).

For example, Table 2 below is the LSA or LSP sent by the first network node:

Table 2

| Router ID: 1 | | | | | | | | |
| LSP | Link | cost | BW | BWleft | error ($10^{-6}$) | lost ($10^{-6}$) | delay ($\mu s$) | Jitter ($\mu s$) |
| --- | --- | --- | --- | --- | --- | --- | --- | --- |
| | $1 \rightarrow 2$ | 2 0 | 1 G | 78 9M | 1 00 | 2 00 | 4 5 | 8 |
| | $1 \rightarrow 3$ | 1 0 | 2. 5 G | 12 3 M | 2 00 | 4 00 | 4 5 | 8 |

Table 3 below is the LSDB formed by the LSAs or LSPs sent by all the network nodes in the first AS:

Table 3

| Router ID: 1 | | | | | | | | | |
| Router ID | L P | Link | cost | BW | BW left | error ($10^{-6}$) | lost ($10^{-6}$) | delay ($\mu s$) | jitter ($\mu s$) |
| --- | --- | --- | --- | --- | --- | --- | --- | --- | --- |
| 1 | L SP | $1 \rightarrow 2$ | 2 0 | 1 G | 789 M | 1 00 | 2 00 | 45 | 8 |
| | | $1 \rightarrow 3$ | 1 0 | 2 .5 G | 123 M | 2 00 | 4 00 | 45 | 8 |
| 2 | L SP | $2 \rightarrow 1$ | 1 0 | ... | ... | ... | ... | ... | ... |
| | | $2 \rightarrow 3$ | 1 5 | ... | ... | ... | ... | ... | ... |
| | | $2 \rightarrow 4$ | 2 0 | ... | ... | ... | ... | ... | ... |
| | | $2 \rightarrow 5$ | 1 0 | 2 .5 G | 900 M | 0 | 0 | 20 | 3 |

where Router ID is an identifier of a network node, Link is a link, cost is a cost value, BW is a bandwidth, BWleft is a remaining bandwidth, error is a packet error rate, and lost is a packet loss rate.

It should be noted that Table 2 and Table 3 above are only exemplary, and the content and forms of the LSA or LSP and the LSDB of the present invention are not limited thereto.

Exemplarily, the sending an LSA or LSP to a neighboring node of the first network node may include:

at intervals of a set time, sending the LSA or LSP to the neighboring node of the first network node.

Further, when an absolute value of a difference between one or more currently acquired link quality indexes (link quality information) of the link used by the first network node to forward traffic and one or more link quality indexes (link quality information), which are acquired last time, of the link used by the first network node to forward traffic is less than or equal to a first preset value, the sent LSA or LSP may further include an omission mark, where the omission mark is used for instructing the neighboring node of the first network node to discard the LSA or LSP.

Optionally, the first preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the first preset value.

Further, the sending an LSA or LSP to a neighboring node of the first network node may further include:

within the set time, when an absolute value of a difference between one or more currently acquired link quality indexes (link quality information) of the link used by the first network node to forward traffic and one or more link quality indexes (link quality information), which are acquired last time, of the link used by the first network node to forward traffic is greater than a second preset value, sending the LSA or LSP to the neighboring node of the first network node.

Optionally, the second preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the second preset value.

It should be noted that after the LSA or LSP is sent to the neighboring node of the first network node within the set time, the first network node restarts to count time. For example, the set time is 1800 seconds, and when the counted time reaches 1000 seconds, the first network node sends the LSA or LSP to the neighboring node of the first network node; in this case, the first network node restarts to count time from 0.

It may be understood that within the set time, when the absolute value of the difference between the one or more currently acquired link quality indexes (link quality information) of the link used by the first network node to forward traffic and the one or more link quality indexes (link quality information), which are acquired last time, of the link used by the first network node to forward traffic is greater than the second preset value, the LSA or LSP is sent to the neighboring node of the first network node, and the first network node may forward the LSA or LSP to other network nodes in time; therefore, the network nodes in the first AS can perform path calculation in time according to the LSA or LSP, so that a link having a poor dynamic link quality index is avoided in time and network adaptability is strong.

Step 202: Determine, according to the currently acquired link quality information of each link in the first AS, a path used by a first network node to forward traffic to each second network node.

In this embodiment, the second network node is a network node other than the first network node in the first AS.

In an implementation manner of this embodiment, when the link quality information includes a link quality index, step 202 may include:

performing, according to an SPF (Shortest Path First, shortest path first) algorithm, calculation on the link quality index of each link in the first AS, and using a path, which has the smallest path quality information, of all paths from the first network node to each second network node, as the path used by the first network node to forward traffic to each second network node, where the path quality information is a sum of the link quality indexes of the links forming the path.

In another implementation manner of this embodiment, when the link quality information of each link includes multiple link quality indexes, step 202 may include:

selecting, from the multiple link quality indexes, a link quality index as a datum for conversion;
converting other pieces of link quality information of multiple pieces of link quality information according to the datum, where the other pieces of link quality information are link quality information other than the link quality information serving as the datum for conversion of the multiple pieces of link quality information;
calculating, according to configured weights, a weighted sum of the link quality index serving as the datum for conversion and the converted other link quality indexes, so as to obtain the index reference value of each link; and performing calculation on the index reference value of each link according to an SPF algorithm, and using a path, which has the smallest path quality information, of all paths from the first network node to each second network node, as the path used by the first network node to forward traffic to each second network node, where the path quality information is a sum of the index reference values of the links forming the path.

For example, a cost value is used as a datum for conversion, and Formula (1) to Formula (5) for sequentially converting a remaining bandwidth, a packet error rate, a packet loss rate, a delay, and a jitter may be shown as follows:

$$BWleft\_weight= (BW-BWleft)/BW*cost; (1)$$

$$error\_weight=error/10^{-7}*cost; (2)$$

$$lost\_weight=lost/10^{-7}*cost; (3)$$

$$delay\_weight=delay/30\ ms*cost; (4)$$

$$jitter\_weight=jitter/45\ ms*cost; (5)$$

where BWleft_weight is a converted result of a remaining bandwidth, BW is a bandwidth, BWleft is a remaining bandwidth, cost is a cost value, error_weight is a converted result of a packet error rate, error is a packet error rate, lost_weight is a converted result of a packet loss rate, lost is a packet loss rate, delay_weight is a converted result of a delay, delay is a delay, jitter_weight is a converted result of a jitter, and jitter is a jitter.

Optionally, in the implementation manner, the method may further include a step: acquiring the configured weights, where weights corresponding to some of the multiple link quality indexes are 0 or none of weights corresponding to the multiple link quality indexes is 0.

Optionally, the weight may be preconfigured, or may also be modified; for example, a weight corresponding to a bandwidth is modified from 1/4 to 0, a weight corresponding to a remaining bandwidth is modified from 1/4 to 0, a weight corresponding to a packet error rate is modified from 1/4 to 0, and a weight corresponding to a packet loss rate is modified from 1/4 to 1, so as to obtain a path having the lowest packet loss rate.

Specifically, weights corresponding to link quality indexes may be the same, and for example, weights corresponding to a bandwidth, a remaining bandwidth, a packet error rate, a packet loss rate, a delay, and a jitter are all 1/6; weights corresponding to link quality indexes may also be different, and for example, a weight corresponding to a bandwidth is 1/2, and weights corresponding to a remaining bandwidth, a packet error rate, a packet loss rate, a delay, and a jitter are all 1/10.

It should be noted that in the present invention, a weight of at least one dynamic link quality index of the multiple link quality indexes is not 0.

For example, the link quality information includes a bandwidth, a remaining bandwidth, a packet error rate, a packet loss rate, a delay, and a jitter; a weight corresponding to a packet loss rate may be 1, and weights corresponding to a bandwidth, a remaining bandwidth, a packet error rate, a delay, and a jitter may be 0, so as to acquire a path having the lowest packet loss rate.

For another example, the link quality information includes a bandwidth, a remaining bandwidth, a packet error rate, a packet loss rate, a delay, and a jitter; weights corresponding to a bandwidth, a remaining bandwidth, a packet error rate, and a packet loss rate may be 1/4, and weights corresponding to a delay and a jitter may be 0.

For another example, the link quality information includes a bandwidth, a remaining bandwidth, a packet error rate, a packet loss rate, a delay, and a jitter; weights corresponding to a bandwidth, a remaining bandwidth, a packet error rate, a packet loss rate, a delay, and a jitter may all be 1/6.

Exemplarily, step 202 may include:

when an absolute value of a difference between one or more currently acquired link quality indexes (link quality information) of the link in the first AS and one or more link quality indexes (link quality information), which are acquired last time, of the link in the first AS is greater than a third preset value, calculating, according to the one or more currently acquired link quality indexes of the link in the first AS, the path used by the first network node to forward traffic to each second network node.

Optionally, the third preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the third preset value.

It may be understood that when the absolute value of the difference between the one or more currently acquired link quality indexes (link quality information) of the link in the first AS and the one or more link quality indexes (link quality information), which are acquired last time, of the link in the first AS is greater than the third preset value, the path used by the first network node to forward traffic to each second network node is calculated according to the one or more currently acquired link quality indexes of the link in the first AS, so as to avoid frequent calculation for a path when link quality information changes frequently, thereby saving resources.

Step 203: Determine a forwarding entry of the first network node according to the path used by the first network node to forward traffic to each second network node. Step 203 is an optional step.

In this embodiment, the forwarding entry includes a next-hop network node of the first network node in the path used by the first network node to forward traffic to each second network node, that is, a network node that directly receives traffic sent by the first network node, where directly receiving traffic means receiving traffic without forwarding by a network node.

For example, Table 4 below is the forwarding entry of the first network node:

Table 4

| Router ID: 1 | |
| --- | --- |
| Scr-Dst | First Hop |
| 1→2 | 1→2 |
| 1→3 | 1→3 |
| 1→4 | 1→3 |
| 1→5 | 1→2 |
| 1→6 | Unreachable |

where Router ID is an identifier of a network node, Scr-Dst is a source network node and a destination network node, and First Hop is a first-hop network node of network nodes.

It should be noted that Table 4 above is only exemplary, and the content and form of the forwarding entry are not limited in the present invention.

Exemplarily, step 203 may include:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, determining the forwarding entry of the first network node according to the currently determined path used by the first network node to forward traffic to each second network node, where the path quality information is a sum of the index reference values of the links forming the path.

Optionally, the fourth preset value equals a product of multiplying a set ratio by the path quality information of the path that is determined last time and is used by the first network node to forward traffic to each second network node, and the set ratio is greater than 0 and less than 1, for example, 10%.

Further, the set ratio may be modified according to a network condition, so as to modify the fourth preset value.

It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the forwarding entry of the first network node is determined according to the currently determined path used by the first network node to forward traffic to each second network node, where the path quality information is a sum of the index reference values of the links forming the path, so as to avoid that when the determined path used by the first network node to forward traffic to each second network node changes frequently, the forwarding entry of each network node also changes frequently (an actual path for traffic forwarding changes frequently), which further makes the network unstable.

In specific implementation, only one step is selected from step 201, step 202, and step 203 to determine a preset value. That is, it may be selected to determine in step 201 whether an absolute value of a difference between the currently acquired link quality information of the link used by the first network node to forward traffic and the link quality information, which is acquired last time, of the link used by the first network node to forward traffic is greater than the second preset value, or also determine in step 202 whether the absolute value of the difference between the currently acquired link quality information of the link in the first AS and the link quality information, which is acquired last time, of the link in the first AS is greater than the third preset value, or further determine in step 203 whether the absolute value of the difference between the path quality information of the currently determined path that is used by the first network node to forward traffic to each second network node and the path quality information of the path that is determined last time and is used by the first network node to forward traffic to each second network node is greater than the fourth preset value.

In this embodiment of the present invention, link quality information of each link in a first AS is acquired, where the link quality information of each link includes an individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 3

An embodiment of the present invention provides a method for determining a traffic forwarding path. Differences between this embodiment and Embodiment 2 lie in that, in this embodiment, link quality information of each link includes an index reference value calculated according to an individual link quality index of each link, and the link quality index includes one or more dynamic link quality indexes. Referring to FIG. 4, the method includes:

Step 301: Acquire link quality information of each link in a first AS, where the link quality information of each link includes an index reference value calculated according to an individual link quality index of each link, and the link quality index includes one or more dynamic link quality indexes.

It may be understood that this embodiment is compared with Embodiment 2; in this embodiment, the link quality information of each link includes the index reference value calculated according to the individual link quality index of each link, and the volume of the link quality information does not increase as the number of the included link quality indexes increases; compared with that the link quality information of each link includes an individual link quality index of each link and the link quality index includes one or more dynamic link quality indexes in Embodiment 2, network traffic load and processing load of a network node receiving link quality information can be reduced.

In an implementation manner of this embodiment, step 301 may include:

acquiring link quality information of a link used by a first network node to forward traffic, and sending an LSA or LSP to a neighboring node of the first network node, where the LSA or LSP sent by the first network node includes the link quality information, which is currently acquired by the first network node, of the link used by the first network node to forward traffic, and the neighboring node of the first network node is a network node interconnected to the first network node; and

forwarding an LSA or LSP sent by the neighboring node of the first network node, where the LSA or LSP sent by the neighboring node of the first network node includes link quality information, which is currently acquired by the neighboring node of the first network node, of a link used by the neighboring node of the first network node to forward traffic, or link quality information, which is currently acquired by other network nodes, of links used by the other network nodes to forward traffic, or link quality information, which is currently acquired by the neighboring node of the first network node, of a link used by the neighboring node of the first network node to forward traffic and link quality information of links used by other network nodes to forward traffic, and the other network nodes are network nodes other than the first network node and the neighboring node of the first network node in the first AS.

It should be noted that in the OSPF protocol, an LSA carries link quality information, and in the ISIS protocol, an LSP carries link quality information.

Specifically, the acquiring link quality information of a link used by a first network node to forward traffic includes:

acquiring a link quality index of the link used by the first network node to forward traffic; and

performing calculation on the acquired link quality index of the link used by the first network node to forward traffic, so as to obtain an index reference value of the link used by the first network node to forward traffic.

More specifically, a method for acquiring a link quality index of the link used by the first network node to forward traffic may be the same as a method for acquiring a link quality index (including a dynamic link quality index and a static link quality index) of the link used by the first network node to forward traffic in Embodiment 2, and details are not repeatedly described herein.

More specifically, the performing calculation on the acquired link quality index of the link used by the first network node to forward traffic, so as to obtain an index reference value of the link used by the first network node to forward traffic may include:

selecting, from multiple link quality indexes, a link quality index as a datum for conversion;
converting other link quality indexes of the multiple link quality indexes according to the datum, where the other link quality indexes are link quality indexes other than the link quality index serving as the datum for conversion of the multiple link quality indexes; and
calculating, according to configured weights, a weighted sum of the link quality index serving as the datum for conversion and the converted other link quality indexes, so as to obtain the index reference value of each link.

Further, the method may further include a step: acquiring the configured weights, where weights corresponding to some of the multiple link quality indexes are 0 or none of weights corresponding to the multiple link quality indexes is 0. Exemplarily, the sending an LSA or LSP to a neighboring node of the first network node may be the same as the sending an LSA or LSP to a neighboring node of the first network node in Embodiment 2, and details are not repeatedly described herein.

Step 302: Determine, according to the currently acquired link quality information of each link in the first AS, a path used by a first network node to forward traffic to each second network node.

In this embodiment, the second network node is a network node other than the first network node in the first AS.

In an implementation manner of this embodiment, step 302 may include:

performing, according to an SPF algorithm, calculation on the index reference value of each link in the first AS, and using a path, which has the smallest path quality information, of all paths from the first network node to each second network node, as the path used by the first network node to forward traffic to each second network node, where the path quality information is a sum of the index reference values of the links forming the path.

Exemplarily, step 302 may be the same as step 202 in Embodiment 2, and details are not repeatedly described herein.

Step 303: Determine a forwarding entry of the first network node according to the path used by the first network node to forward traffic to each second network node. Step 303 is an optional step.

Specifically, step 303 may be the same as step 203 in Embodiment 2, and details are not repeatedly described herein.

In this embodiment of the present invention, link quality information of each link in a first AS is acquired, where the link quality information of each link includes an index reference value calculated according to an individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 4

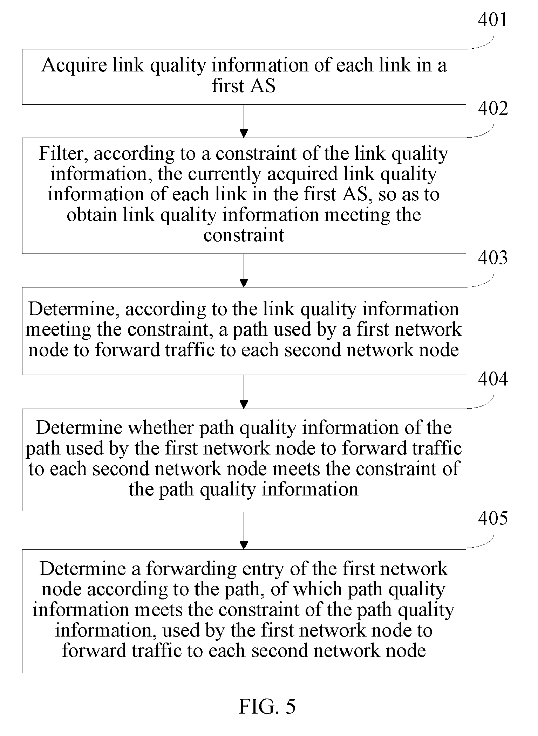

An embodiment of the present invention provides a method for determining a traffic forwarding path. A difference between this embodiment and Embodiment 2 lies in that a dynamic routing protocol used for network nodes in a first AS is the CSPF protocol. Referring to FIG. 5, the method includes:

Step 401: Acquire link quality information of each link in a first AS.
Optionally, step 401 may be the same as step 201 in Embodiment 2 or step 301 in Embodiment 3, and details are not repeatedly described herein.
Step 402: Filter, according to a constraint of the link quality information, the currently acquired link quality information of each link in the first AS, so as to obtain link quality information meeting the constraint. Step 402 is an optional step.

In an actual application, in step 402, a constraint of the link quality information, for example, a packet loss rate being less than $10^{-6}$, a packet error rate being less than $10^{-6}$, a delay being less than 30 ms, and a jitter being less than 45 ms, may be added to an original constraint (for example, a reserved bandwidth, and a management group) supported by the CSPF protocol. The added constraint of the link quality information may involve one link quality index, for example, the packet loss rate being less than $10^{-6}$, or may also involve multiple link quality indexes, for example, the delay being less than 30 ms and the jitter being less than 45 ms, which is not limited in the present invention.

It may be understood that the constraint of the link quality information may be configured according to needs. After step 402 is executed, link quality information that does not meet the constraint is excluded; during determining of a path used by a first network node to forward traffic to each second network node (see step 403 for details), a link having link quality information that does not meet the constraint is not taken into consideration, that is, the determined path used by the first network node to forward traffic to each second network node does not include a link having link quality information that does not meet the constraint.

Step 403: Determine, according to the link quality information meeting the constraint, a path used by a first network node to forward traffic to each second network node.

Optionally, when step 402 is executed, step 403 may be basically the same as step 202 in Embodiment 2 or step 302 in Embodiment 3, and the difference only lies in that, the path used by the first network node to forward traffic to each second network node is determined according to different information, which is the link quality information meeting the constraint in step 403, and is the link quality information in step 203 in Embodiment 2.

Optionally, when step 402 is not executed, step 403 includes: determining, according to the currently acquired link quality information of each link in the first AS, the path used by the first network node to forward traffic to each second network node. In this case, step 402 may be all the same as step 202 in Embodiment 2 or step 302 in Embodiment 3.

Step 404: Determine whether path quality information of the path used by the first network node to forward traffic to each second network node meets the constraint of the path quality information. Step 404 is an optional step.

In this embodiment, the path quality information of the path is a sum of reference index values of the links forming the path.

Specifically, when the path quality information of the path used by the first network node to forward traffic to each second network node meets the constraint of the path quality information, the determined path used by the first network node to forward traffic to each second network node is available, and the available path is used for determining a forwarding entry of a network node; when the path quality information of the path used by the first network node to forward traffic to each second network node does not meet the constraint of the path quality information, the determined path used by the first network node to forward traffic to each second network node is unavailable, and the unavailable path is discarded.

Step 405: Determine a forwarding entry of the first network node according to the path, of which path quality information meets the constraint of the path quality information, used by the first network node to forward traffic to each second network node. Step 405 is an optional step.

Optionally, step 405 may be the same as step 203 in Embodiment 2, and details are not repeatedly described herein.

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, before a forwarding entry of the first network node is determined, the link quality information of each link in the first AS is filtered according to a constraint of the link quality information, so as to obtain link quality information meeting the constraint, or, it is determined whether path quality information of the path used by the first network node to forward traffic to each second network node meets a constraint of the path quality information, and therefore the forwarding entry of the first network node may be determined according to a requirement for the link quality information or the path quality information.

Embodiment 5

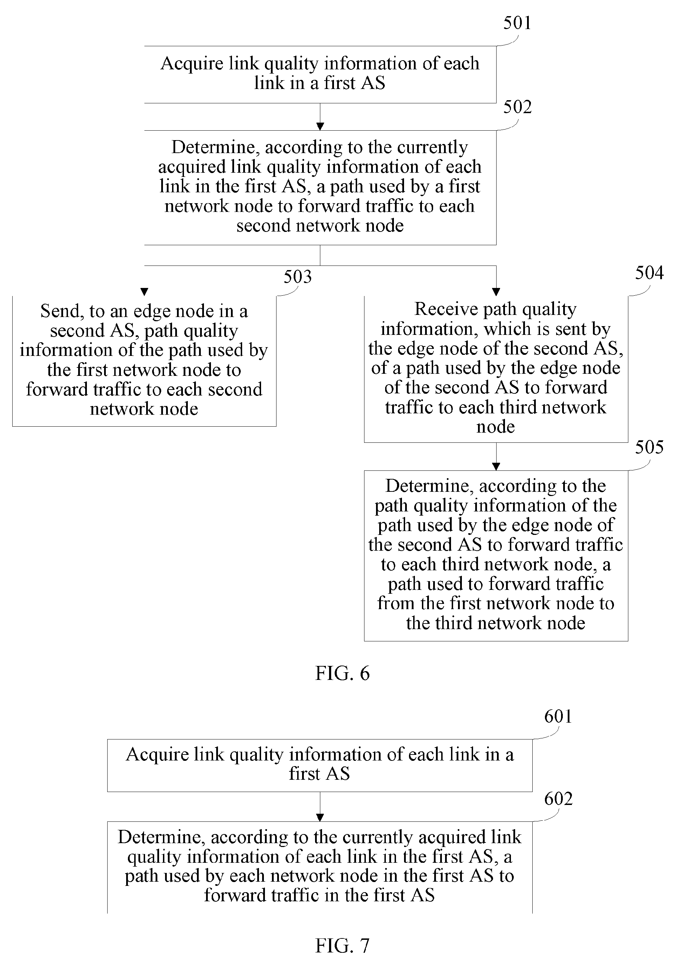

An example in which network nodes are in different ASs is used in this embodiment to describe a method for determining a traffic forwarding path of the present invention. An embodiment of the present invention provides a method for determining a traffic forwarding path. In this embodiment, a first network node is an edge node of a first AS, the first AS is any AS of multiple ASs, a dynamic routing protocol used between the multiple ASs may be the BGP protocol, and the edge node of the first AS is a network node that is in the first AS and is connected to a network node that is not in the first AS. Referring to FIG. 6, the method includes:

Step 501: Acquire link quality information of each link in a first AS.
Optionally, step 501 may be the same as step 201 in Embodiment 2 or step 301 in Embodiment 3, and details are not repeatedly described herein.
Step 502: Determine, according to the currently acquired link quality information of each link in the first AS, a path used by a first network node to forward traffic to each second network node.
Optionally, step 502 may be the same as step 202 in Embodiment 2 or step 302 in Embodiment 3, and details are not repeatedly described herein.
In an implementation manner of this embodiment, the method may further include a step: filtering, according to a constraint of the link quality information, the link quality information of each link in the first AS, so as to obtain link quality information meeting the constraint. The step is executed before step 502, and the step may be the same as step 402 in Embodiment 4, and details are not repeatedly described herein.
In another implementation manner of this embodiment, the method may further include a step: determining whether path quality information of the path used by the first network node to forward traffic to each second network node meets a constraint of the path quality information. The step is executed after step 502, and the step may be the same as step 404 in Embodiment 4, and details are not repeatedly described herein.
In still another implementation manner of this embodiment, the method may further include a step: determining a forwarding entry of the first network node according to the path used by the first network node to forward traffic to each second network node. The step is executed after step 502, and the step may be the same as step 405 in Embodiment 4, and details are not repeatedly described herein.
Step 503: Send BGP routing information to an edge node in a second AS.
In this embodiment, the BGP routing information sent by the first network node includes path quality information of the path used by the first network node to forward traffic to each second network node. The second AS is an AS, which is connected to the first AS, of multiple ASs, and the path quality information is a sum of index reference values of links forming the path. The edge node of the second AS is a network node that is in the second AS and is connected to a network node that is not in the second AS.
Exemplarily, step 503 may include:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, sending, to the edge node in the second AS, the path quality information of the path used by the first network node to forward traffic to each second network node.

Optionally, the fourth preset value equals a product of multiplying a set ratio by the path quality information of the path that is determined last time and is used by the first network node to forward traffic to each second network node, and the set ratio is greater than 0 and less than 1, for example, 10%.
Further, the set ratio may be modified according to a network condition, so as to modify the fourth preset value.
It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the path quality information of the path used by the first network node to forward traffic to each second network node is sent to the edge node in the second AS, so as to avoid that when the path used by the first network node to forward traffic to each second network node changes frequently, the forwarding entry of the first network node also changes frequently (an actual path for traffic forwarding changes frequently), which further makes the network unstable.
Step 504: Receive the BGP routing information sent by the edge node of the second AS. Step 504 and step 503 are not subject to a specific order.
In this embodiment, the BGP routing information sent by the edge node of the second AS includes path quality information of a path used by the edge node of the second AS to forward traffic to each third network node. The third network node is a network node, other than the edge node of the second AS, in the second AS.

Step 505: Determine, according to the path quality information of the path used by the edge node of the second AS to forward traffic to each third network node, a path used to forward traffic from the first network node to the third network node. Step 505 is executed after step 504.

In specific implementation, the first network node first adds path quality information of a path used by an edge node of a second AS to forward traffic to a third network node to path quality information of a path used by the first network node to forward traffic to the edge node of the second AS, so as to obtain path quality information of a path used by the first network node to forward traffic to the third network node by using the edge node of the second AS. Then, in a manner same as that in the foregoing, the first network node may obtain path quality information of a path used by the first network node to forward traffic to the third network node by using an edge node of another second AS. Then, a path corresponding to the smallest path quality information that is selected from obtained path quality information of paths is used as a path used by the first network node to forward traffic to the third network node. Finally, in a manner same as that in the foregoing, the first network node may determine paths used by the first network node to forward traffic to other third network nodes.

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, path quality information of a path used by a network node of the first AS to forward traffic may be sent to an edge node, which is connected to the network node, of a second AS, path quality information of a path used by the edge node of the second AS to forward traffic is received, and a path used by the network node to forward traffic to a network node of the second AS is determined, thereby implementing determining of a path used to forward traffic between multiple ASs.

Embodiment 6

An embodiment of the present invention provides a method for determining a traffic forwarding path. The method may be executed by a network management device, and the network management device, which is independent from each network node, is, for example, an OSS (Operations Support System, Operations Support System), an NMS (Network Management System, network management system), or an SDN (Software Defined Network, Software Defined Network) controller. Referring to FIG. 7, the method includes:

Step 601: Acquire link quality information of each link in a first AS.

In this embodiment, the link quality information of each link includes an individual link quality index of each link, or, the link quality information of each link includes an index reference value calculated according to the individual link quality index of each link. The link quality index includes one or more dynamic link quality indexes.

Specifically, the dynamic link quality index may include a remaining bandwidth, a packet error rate, a packet loss rate, a delay, and a jitter. The dynamic link quality index may further include an extended dynamic link quality index such as a packet loss rate for an oversized packet (a packet exceeding 1500 bytes), which is not limited in the present invention.

Optionally, the link quality information may further include one or more static link quality indexes.

Specifically, the static link quality index may include a cost value and a bandwidth.

Step 602: Determine, according to the currently acquired link quality information of each link in the first AS, a path used by each network node in the first AS to forward traffic in the first AS.

In this embodiment, the path used by each network node in the first AS to forward traffic in the first AS is a path used by each network node in the first AS to forward traffic to a network node other than the network node in the first AS.

In an actual application, a dynamic routing protocol used in the method may be the OSPF protocol or the ISIS protocol, a dynamic routing protocol used in the method may also be the CSPF protocol, and a dynamic routing protocol used in the method may further be the BGP protocol.

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by each network node in the first AS to forward traffic in the first AS is determined according to the currently acquired link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

Embodiment 7

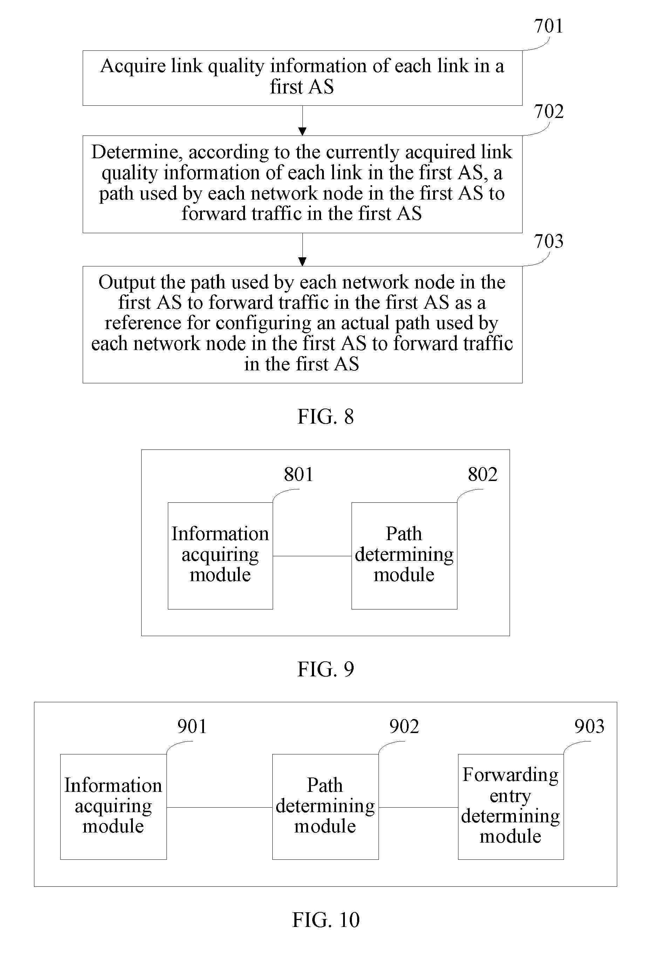

In this embodiment, a method for determining a traffic forwarding path provided in Embodiment 6 is specifically described. Referring to FIG. 8, the method includes:

Step 701: Acquire link quality information of each link in a first AS.
In an implementation manner of this embodiment, step 701 may include:

when an LSA or LSP sent by a network node in the first AS includes a dynamic link quality index, acquiring, from the network node in the first AS, the dynamic link quality index of each link in the first AS; or, detecting the dynamic link quality index of each link in the first AS.

It should be noted that in the OSPF protocol, an LSA carries link quality information, and in the ISIS protocol, an LSP carries link quality information. In an actual application, a network management device receives an LSDB from the network node, where the LSDB is formed of several LSAs or LSPs.
Optionally, when the link quality index further includes one or more static link quality indexes, step 701 may further include:

acquiring, from the network node in the first AS, the static link quality index of each link in the first AS; or, acquiring the static link quality index, which is stored in a network management device, of each link in the first AS.

It should be noted that in an actual application, the LSDB is acquired from the network node in the first AS, and the LSDB may include the static link quality index, or may also include the static link quality index and the dynamic link quality index. If the dynamic link quality index and the static link quality index are separately acquired, for example, if the dynamic link quality index of each link in the first AS is detected, and meanwhile the static link quality index of each link in the first AS is acquired from the network node in the first AS, after the dynamic link quality index and the static link quality index are acquired, the dynamic link quality index and the static link quality index are combined to form the LSDB.

Step 702: Determine, according to the currently acquired link quality information of each link in the first AS, a path used by each network node in the first AS to forward traffic in the first AS.
Optionally, step 702 may be the same as step 202 in Embodiment 2 or step 302 in Embodiment 3, and details are not repeatedly described herein.
Optionally, step 702 may include:

when an absolute value of a difference between the currently acquired link quality information of each link in the first AS and link quality information, which is acquired last time, of each link in the first AS is greater than a fifth preset value, calculating, according to the currently acquired link quality information of each link in the first AS, the path used by each network node in the first AS to forward traffic in the first AS.

Optionally, the fifth preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the fifth preset value.

It may be understood that when an absolute value of a difference between one or more currently acquired link quality indexes (link quality information) of the link in the first AS and one or more link quality indexes (link quality information), which are acquired last time, of the link in the first AS is greater than the fifth preset value, a path used by a first network node to forward traffic to each second network node is calculated according to the one or more currently acquired link quality indexes of the link in the first AS, so as to avoid frequent calculation for a path when link quality information changes frequently, thereby saving resources.

In an implementation manner of this embodiment, the method may further include a step: filtering, according to a constraint of the link quality information, the link quality information of each link in the first AS, so as to obtain link quality information meeting the constraint. The step is executed before step 702.

Specifically, the filtering, according to a constraint of the link quality information, the link quality information of each link in the first AS, so as to obtain link quality information meeting the constraint may be the same as step 402 in Embodiment 4, and details are not repeatedly described herein.

In another implementation manner of this embodiment, the method may further include a step: determining whether path quality information of the path used by each network node in the first AS to forward traffic in the first AS meets a constraint of the path quality information. The step is executed after step 702.

In this embodiment, the path quality information of the path is a sum of reference index values of the links forming the path.

Specifically, the determining whether path quality information of the path used by each network node in the first AS to forward traffic in the first AS meets a constraint of the path quality information may be the same as step 404 in Embodiment 4, and details are not repeatedly described herein.

Step 703: Output the path used by each network node in the first AS to forward traffic in the first AS as a reference for configuring an actual path used by each network node in the first AS to forward traffic in the first AS.

It may be understood that the network management device may output, according to different link quality indexes, different reference paths, for example, a path having the lowest packet loss rate, a path having the shortest delay, and a path of which both a packet loss rate and a delay are taken into consideration.

Further, the network management device may output multiple reference paths according to a set policy, for example, output a path having the lowest packet loss rate preferentially.

Exemplarily, step 703 may include:

when an absolute value of a difference between path quality information of the currently determined path that is used by each network node in the first AS to forward traffic in the first AS and path quality information of the path which is determined last time and is used by each network node in the first AS to forward traffic in the first AS is greater than a sixth preset value, outputting the currently determined path that is used by each network node in the first AS to forward traffic in the first AS as the reference for configuring the actual path used by each network node in the first AS to forward traffic in the first AS, where the path quality information is a sum of index reference values of links forming the path.

Optionally, the sixth preset value equals a product of multiplying a set ratio by the path quality information of the path that is determined last time and is used by each network node in the first AS to forward traffic in the first AS, and the set ratio is greater than 0 and less than 1, for example, 10%.

Further, the set ratio may be modified according to a network condition, so as to modify the sixth preset value.

It may be understood that when the absolute value of the difference between the path quality information of the currently determined path that is used by each network node in the first AS to forward traffic in the first AS and the path quality information of the path that is determined last time and is used by each network node in the first AS to forward traffic in the first AS is greater than the sixth preset value, the currently determined path that is used by each network node in the first AS to forward traffic in the first AS is output as the reference for configuring the actual path used by each network node in the first AS to forward traffic in the first AS, so as to avoid that when the path used by each network node in the first AS to forward traffic in the first AS changes frequently, the determined path used by each network node in the first AS to forward traffic in the first AS is frequently output, which makes the network unstable; and so as also to reduce a workload of a network administrator.

In an implementation manner of this embodiment, the method may further include a step: outputting path quality information of the path used by each network node in the first AS to forward traffic in the first AS. The step and step 703 may be executed at the same time.

It may be understood that in this embodiment, the network administrator eventually decides the actual path used by each network node in the first AS to forward traffic in the first AS, and the actual path used to forward traffic does not change by itself according to a change of link quality, thereby ensuring network stability. Specifically, the network administrator may decide, according to a priority condition (for example, a degree by which a packet loss rate is lowered) of the path used by each network node in the first AS to forward traffic in the first AS, whether to use the path used by each network node in the first AS to forward traffic in the first AS to configure the actual path used by each network node in the first AS to forward traffic in the first AS. In addition, the network administrator may configure, according to a "Make before Break" (Make before Break) principle, the actual path used by each network node in the first AS to forward traffic in the first AS, that is, before deleting an original path, first creates a new path and adjusts traffic to the new path for forwarding.

In another implementation manner of this embodiment, the method may further include steps:

acquiring link quality information of each link in a second AS; and
determining, according to the link quality information of each link in the second AS, a path used by each network node in the first AS to forward traffic to a network node in the second AS.

Specifically, the acquiring link quality information of each link in a second AS may be the same as step 501, and details are not repeatedly described herein.

Specifically, the determining, according to the link quality information of each link in the second AS, a path used by each network node in the first AS to forward traffic to a network node in the second AS may be the same as step 505 in Embodiment 5, and details are not repeatedly described herein.

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

Embodiment 8

An embodiment of the present invention provides an apparatus for determining a traffic forwarding path. In this embodiment, the apparatus is disposed on a first network node, and the first network node is a network node in a first AS. Referring to FIG. 9, the apparatus includes:

an information acquiring module 801, configured to acquire link quality information of each link in a first AS; and
a path determining module 802, configured to determine, according to the currently acquired link quality information of each link in the first AS, a path used by a first network node to forward traffic to each second network node.

In this embodiment, the link quality information of each link includes an individual link quality index of each link, or, the link quality information of each link includes an index reference value calculated according to an individual dynamic link quality index of each link. The link quality index includes one or more dynamic link quality indexes. The second network node is a network node other than the first network node in the first AS.

Optionally, the link quality information may further include one or more static link quality indexes.

It should be noted that the dynamic link quality index is a link quality index that changes in real time according to a link condition, the static link quality index is a link quality index preconfigured with a set value, and the static link quality index stays unchanged when a link condition changes.

In an actual application, a dynamic routing protocol used in the apparatus may be the OSPF protocol or the ISIS protocol (see Embodiment 9), a dynamic routing protocol used in the apparatus may also be the CSPF protocol (see Embodiment 10), and a dynamic routing protocol used in the apparatus may further be the BGP protocol (see Embodiment 11).

In this embodiment of the present invention, link quality information of each link in a first AS is acquired, where the link quality information of each link includes an individual link quality index of each link, or, the link quality information of each link includes an index reference value calculated according to the individual link quality index of each link, and the link quality index includes one or more dynamic link quality indexes, and a path used by a first network node to forward traffic to each second network node is determined according to the currently acquired link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 9

In this embodiment, an example in which a dynamic routing protocol used in the apparatus may be the OSPF protocol or the ISIS protocol is used to describe an apparatus for determining a traffic forwarding path provided in the present invention. The embodiment of the present invention provides the apparatus for determining a traffic forwarding path, which is applicable to the method for determining a traffic forwarding path provided in Embodiment 2 or Embodiment 3. Referring to FIG. 10, the apparatus includes:

an information acquiring module 901, configured to acquire link quality information of each link in a first AS;
a path determining module 902, configured to determine, according to the currently acquired link quality information of each link in the first AS, a path used by a first network node to forward traffic to each second network node; and
a forwarding entry determining module 903, configured to determine a forwarding entry of the first network node according to the path used by the first network node to forward traffic to each second network node.

In this embodiment, the link quality information of each link includes an individual link quality index of each link, or, the link quality information of each link includes an index reference value calculated according to an individual dynamic link quality index of each link. The link quality index includes one or more dynamic link quality indexes. The second network node is a network node other than the first network node in the first AS.
Optionally, the dynamic link quality index may include a remaining bandwidth, a packet error rate, a packet loss rate, a delay, and a jitter. The dynamic link quality index may further include an extended dynamic link quality index such as a packet loss rate for an oversized packet (a packet exceeding 1500 bytes), and the present invention is not limited thereto.
Optionally, the link quality index may further include one or more static link quality indexes. Optionally, the static link quality index may include a cost value and a bandwidth.
It should be noted that the dynamic link quality index is a link quality index that changes in real time according to a link condition, the static link quality index is a link quality index preconfigured with a set value, and the static link quality index stays unchanged when a link condition changes.
It may be understood that when the link quality information of each link includes the index reference value calculated according to the individual dynamic link quality index of each link, the volume of the link quality information does not increase as the number of the included link quality indexes increases; compared with that the link quality information of each link includes an individual link quality index of each link, and the link quality index includes one or more dynamic link quality indexes, network traffic load and processing load of a network node receiving link quality information can be reduced.
Specifically, when the link quality information of each link includes the index reference value calculated according to the individual dynamic link quality index of each link, the information acquiring module 901 is configured to:

select, from multiple link quality indexes, a link quality index as a datum for conversion;
convert other pieces of link quality information of multiple pieces of link quality information according to the datum, where the other pieces of link quality information are link quality information other than the link quality information serving as the datum for conversion of the multiple pieces of link quality information; and
calculate, according to configured weights, a weighted sum of the link quality index serving as the datum for conversion and the converted other link quality indexes, so as to obtain the index reference value of each link.

When the link quality information of each link includes an individual link quality index of each link, and the link quality index includes one or more dynamic link quality indexes, the path determining module 902 is configured to:

select, from multiple link quality indexes, a link quality index as a datum for conversion;
convert other pieces of link quality information of multiple pieces of link quality information according to the datum, where the other pieces of link quality information are link quality information other than the link quality information serving as the datum for conversion of the multiple pieces of link quality information; and

calculate, according to configured weights, a weighted sum of the link quality index serving as the datum for conversion and the converted other link quality indexes, so as to obtain the index reference value of each link.

Optionally, the apparatus may further include:

a weight acquiring module, configured to acquire the configured weights, where weights corresponding to some of the multiple link quality indexes are 0 or none of weights corresponding to the multiple link quality indexes is 0.

It should be noted that in the present invention, a weight of at least one dynamic link quality index of the multiple link quality indexes is not 0.

In an implementation manner of this embodiment, the information acquiring module 901 may include:

an acquiring unit, configured to acquire the link quality information of a link used by the first network node to forward traffic;

a sending unit, configured to send an LSA or LSP to a neighboring node of the first network node, where the LSA or LSP sent by the first network node includes the link quality information, which is currently acquired by the first network node, of the link used by the first network node to forward traffic, and the neighboring node of the first network node is a network node interconnected to the first network node; and

a receiving unit, configured to receive an LSA or LSP sent by the neighboring node of the first network node, where the LSA or LSP sent by the neighboring node of the first network node includes link quality information, which is currently acquired by the neighboring node of the first network node, of a link used by the neighboring node of the first network node to forward traffic, or link quality information, which is currently acquired by other network nodes, of links used by the other network nodes to forward traffic, or link quality information, which is currently acquired by the neighboring node of the first network node, of a link used by the neighboring node of the first network node to forward traffic and link quality information of links used by other network nodes to forward traffic, and the other network nodes are network nodes other than the first network node and the neighboring node of the first network node in the first AS, where

the sending unit is further configured to send the LSA or LSP sent by the neighboring node of the first network node.

Exemplarily, the sending unit may be configured to:

at intervals of a set time, send the LSA or LSP to the neighboring node of the first network node.

Further,

when an absolute value of a difference between one or more currently acquired link quality indexes (link quality information) of the link used by the first network node to forward traffic and one or more link quality indexes (link quality information), which are acquired last time, of the link used by the first network node to forward traffic is less than or equal to a first preset value, the sent LSA or LSP may further include an omission mark, where the omission mark is used for instructing the neighboring node of the first network node to discard the LSA or LSP.

Optionally, the first preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the first preset value.

Further, the sending unit may be configured to:

within the set time, when an absolute value of a difference between the currently acquired link quality information of the link used by the first network node to forward traffic and the link quality information, which is acquired last time, of the link used by the first network node to forward traffic is greater than a second preset value, send the LSA or LSP to the neighboring node of the first network node.

Optionally, the second preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the second preset value.

It should be noted that after the LSA or LSP is sent to the neighboring node of the first network node within the set time, the first network node restarts to count time. For example, the set time is 1800 seconds, and when the counted time reaches 1000 seconds, the first network node sends the LSA or LSP to the neighboring node of the first network node; in this case, the first network node restarts to count time from 0.

It may be understood that within the set time, when the absolute value of the difference between the one or more currently acquired link quality indexes (link quality information) of the link used by the first network node to forward traffic and the one or more link quality indexes (link quality information), which are acquired last time, of the link used by the first network node to forward traffic is greater than the second preset value, the LSA or LSP is sent to the neighboring node of the first network node, and the first network node may forward the LSA or LSP to other network nodes in time; therefore, the network nodes in the first AS can perform path calculation in time according to the LSA or LSP, so that a link having a poor dynamic link quality index is avoided in time and network adaptability is strong.

Exemplarily, the path determining module 902 may be configured to:

when an absolute value of a difference between one or more currently acquired link quality indexes (link quality information) of the link in the first AS and one or more link quality indexes (link quality information), which are acquired last time, of the link in the first AS is greater than a third preset value, calculate, according to the one or more currently acquired link quality indexes of the link in the first AS, the path used by the first network node to forward traffic to each second network node.

Optionally, the third preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the third preset value.

It may be understood that when the absolute value of the difference between the one or more currently acquired link quality indexes (link quality information) of the link in the first AS and the one or more link quality indexes (link quality information), which are acquired last time, of the link in the first AS is greater than the third preset value, the path used by the first network node to forward traffic to each second network node is calculated according to the one or more currently acquired link quality indexes of the link in the first AS, so as to avoid frequent calculation for a path when link quality information changes frequently, thereby saving resources.

Exemplarily, the forwarding entry determining module 903 may be configured to:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, determine the forwarding entry of the first network node according to the currently determined path used by the first network node to forward traffic to each second network node, where the path quality information is a sum of the index reference values of the links forming the path.

Optionally, the fourth preset value equals a product of multiplying a set ratio by the path quality information of the path that is determined last time and is used by the first network node to forward traffic to each second network node, and the set ratio is greater than 0 and less than 1, for example, 10%.

Further, the set ratio may be modified according to a network condition, so as to modify the fourth preset value.

It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the forwarding entry of the first network node is determined according to the currently determined path used by the first network node to forward traffic to each second network node, where the path quality information is a sum of the index reference values of the links forming the path, so as to avoid that when the determined path used by the first network node to forward traffic to each second network node changes frequently, the forwarding entry of each network node also changes frequently (an actual path for traffic forwarding changes frequently), which further makes the network unstable.

In this embodiment of the present invention, link quality information of each link in a first AS is acquired, where the link quality information of each link includes an individual link quality index of each link, and the link quality index includes one or more dynamic link quality indexes, and a path used by a first network node to forward traffic to each second network node is determined according to the link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 10

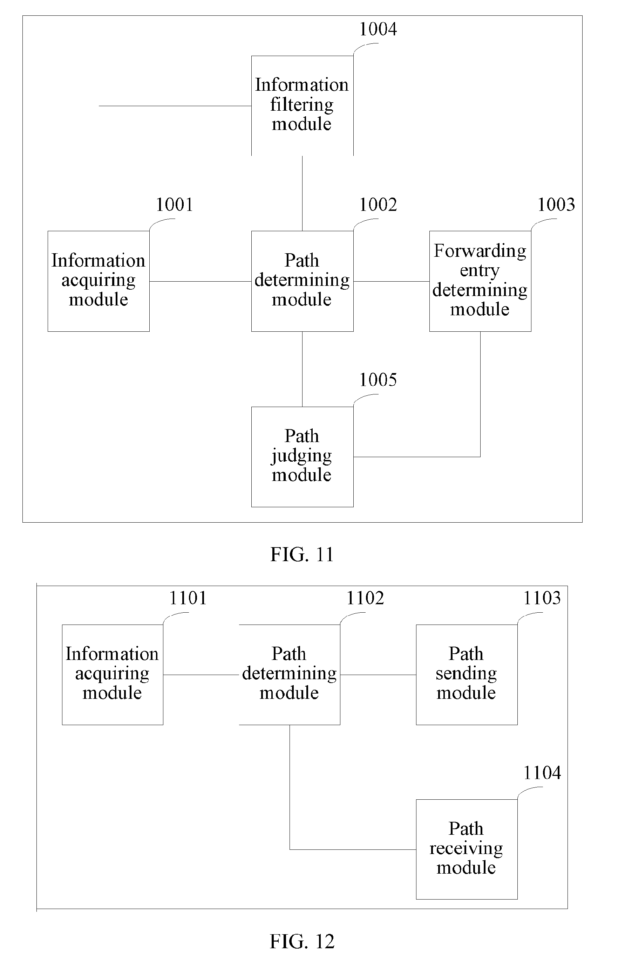

In this embodiment, an example in which a dynamic routing protocol used in the apparatus may be the CSPF protocol is used to describe an apparatus for determining a traffic forwarding path provided in the present invention. The embodiment of the present invention provides the apparatus for determining a traffic forwarding path, which is applicable to the method for determining a traffic forwarding path provided in Embodiment 4. Referring to FIG. 11, the apparatus includes:

an information acquiring module 1001, configured to acquire link quality information of each link in a first AS;
a path determining module 1002, configured to determine, according to the currently acquired link quality information of each link in the first AS, a path used by a first network node to forward traffic to each second network node; and
a forwarding entry determining module 1003, configured to determine a forwarding entry of the first network node according to the path used by the first network node to forward traffic to each second network node.

Optionally, the information acquiring module 1001, the path determining module 1002, and the forwarding entry determining module 1003 may be respectively the same as an information acquiring module 901, a path determining module 902, and a forwarding entry determining module 903 provided in Embodiment 9, and details are not repeatedly described herein.
In an implementation manner of this embodiment, the apparatus may further include:

an information filtering module 1004, configured to filter, according to a constraint of the link quality information, the currently acquired link quality information of each link in the first AS, so as to obtain link quality information meeting the constraint.

Correspondingly, the path determining module 1002 is configured to determine, according to the link quality information meeting the constraint, the path used by the first network node to forward traffic to each second network node.
In another implementation manner of this embodiment, the apparatus may further include:

a path judging module 1005, configured to determine whether path quality information of the path used by the first network node to forward traffic to each second network node meets a constraint of the path quality information, where the forwarding entry determining module 1003 is configured to determine a forwarding entry of the first network node according to the path, of which path quality information meets the constraint of the path quality information, used by the first network node to forward traffic to each second network node.

In this embodiment of the present invention, link quality information of each link in a first AS is acquired, where the link quality information of each link includes an individual link quality index of each link, and the link quality index includes one or more dynamic link quality indexes, and a path used by a first network node to forward traffic to each second network node is determined according to the link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, before a forwarding entry of the first network node is determined, the link quality information of each link in the first AS is filtered according to a constraint of the link quality information, so as to obtain link quality information meeting the constraint, or, it is determined whether path quality information of the path used by the first network node to forward traffic to each second network node meets a constraint of the path quality information, and therefore the forwarding entry of the first network node may be determined according to a requirement for the link quality information or the path quality information.

Embodiment 11

In this embodiment, an example in which a dynamic routing protocol used in the apparatus may be the BGP protocol is used to describe an apparatus for determining a traffic forwarding path provided in the present invention. The embodiment of the present invention provides the apparatus for determining a traffic forwarding path, which is applicable to the method for determining a traffic forwarding path provided in Embodiment 5. Referring to FIG. 12, the apparatus includes:

an information acquiring module 1101, configured to acquire link quality information of each link in a first AS;
a path determining module 1102, configured to determine, according to the currently acquired link quality information of each link in the first AS, a path used by a first network node to forward traffic to each second network node;
a path sending module 1103, configured to Send BGP routing information to an edge node in a second AS, where the BGP routing information sent by the first network node includes path quality information of the path used by the first network node to forward traffic to each second network node, the second AS is an AS, which is connected to the first AS, of multiple ASs, and the path quality information is a sum of index reference values of links forming the path; and
a path receiving module 1104, configured to receive the BGP routing information sent by the edge node of the second AS, where the BGP routing information sent by the edge node of the second AS includes path quality information of a path used by the edge node of the second AS to forward traffic to each third network node, and the third network node is a network node, other than the edge node of the second AS, in the second AS.

The path determining module 1102 is further configured to determine, according to the path quality information of the path used by the edge node of the second AS to forward traffic to each third network node, a path used to forward traffic from the first network node to the third network node.

Optionally, the information acquiring module 1101 and the path determining module 1102 may be respectively the same as an information acquiring module 901 and a path determining module 902 in Embodiment 9, and details are not repeatedly described herein.

Exemplarily, the path sending module 1103 may be configured to:

when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, send, to the edge node in the second AS, the path quality information of the path used by the first network node to forward traffic to each second network node.

Optionally, the fourth preset value equals a product of multiplying a set ratio by the path quality information of the path that is determined last time and is used by the first network node to forward traffic to each second network node, and the set ratio is greater than 0 and less than 1, for example, 10%.

Further, the set ratio may be modified according to a network condition, so as to modify the fourth preset value.

It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the path quality information of the path used by the first network node to forward traffic to each second network node is sent to the edge node in the second AS, so as to avoid that when the path used by the first network node to forward traffic to each second network node changes frequently, a forwarding entry of the first network node also changes frequently (an actual path for traffic forwarding changes frequently), which further makes the network unstable.

In an implementation manner of this embodiment, the apparatus may further include:

an information filtering module, configured to filter, according to a constraint of the link quality information, the link quality information of each link in the first AS, so as to obtain link quality information meeting the constraint.

Correspondingly, the path determining module 1102 is configured to determine, according to the link quality information meeting the constraint, the path used by the first network node to forward traffic to each second network node.

Optionally, the information filtering module may be the same as the information filtering module 1004 in Embodiment 10, and details are not repeatedly described herein.

In another implementation manner of this embodiment, the apparatus may further include:

a path judging module, configured to determine whether path quality information of the path used by the first network node to forward traffic to each second network node meets a constraint of the path quality information, where the path quality information of the path is a sum of reference index values of the links forming the path.

Optionally, the path judging module may be the same as the path judging module 1005 in Embodiment 10, and details are not repeatedly described herein.

In still another implementation manner of this embodiment, the apparatus may further include:

a forwarding entry determining module, configured to determine a forwarding entry of the first network node according to the path used by the first network node to forward traffic to each second network node.

Optionally, the forwarding entry determining module may be the same as the forwarding entry determining module 903 in Embodiment 9, and details are not repeatedly described herein.

In this embodiment of the present invention, link quality information of each link in a first AS is acquired, where the link quality information of each link includes an individual link quality index of each link, and the link quality index includes one or more dynamic link quality indexes, and a path used by a first network node to forward traffic to each second network node is determined according to the link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, path quality information of a path used by a network node of the first AS to forward traffic may be sent to an edge node, which is connected to the network node, of a second AS, path quality information of a path used by the edge node of the second AS to forward traffic is received, and a path used by the network node to forward traffic to a network node of the second AS is determined, thereby implementing determining of a path used to forward traffic between multiple ASs.

Embodiment 12

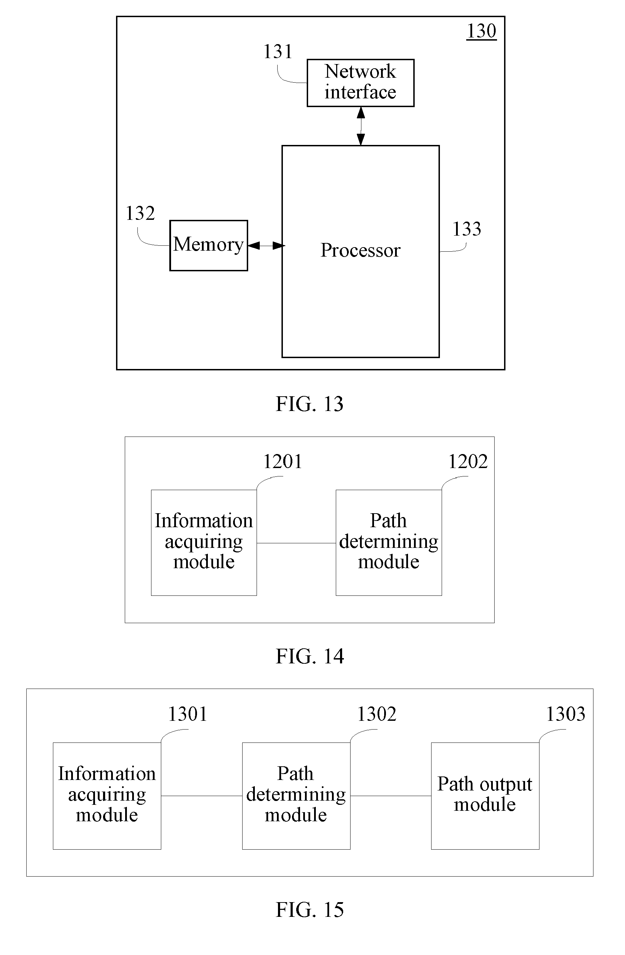

An embodiment of the present invention provides an apparatus for determining a traffic forwarding path, where the apparatus may be, for example, a server or a personal computer. Referring to FIG. 13, the apparatus includes: a network interface 131, a memory 132, and a processor 133 (for example, a CPU), and may be configured to execute the method in any embodiment of Embodiment 1 to Embodiment 5.

Each constituent part of the apparatus 130 for determining a traffic forwarding path is introduced in detail below with reference to FIG. 13:

The memory 132 may be configured to store a software program and an application module. The processor 133 runs the software program and application module stored in the memory 132, so as to execute various functional applications and data processing of the apparatus 130 for determining a traffic forwarding path. The memory 132 may mainly include a program storage area and a data storage area, where the program storage area may store an operating system, an application program required for at least one function, and the like, and the data storage area may store data (for example, path quality information) that is created according to processing of the apparatus 130 for determining a traffic forwarding path, and the like. In addition, the memory 132 may include a high-speed RAM (Random Access Memory, random access memory), and may further include a non-volatile memory (non-volatile memory), for example, at least one disk storage device, a flash memory device, or other volatile solid-state storage devices.

The processor 133 is a control center of the apparatus 130 for determining a traffic forwarding path, and is connected to all parts of the entire apparatus 130 for determining a traffic forwarding path by using various interfaces and circuits.

Specifically, the processor 133 runs or executes the software program and application module stored in the memory 132 and invokes data stored in the memory 132, so that the processor 133 can implement: acquiring link quality information of each link in a first AS; and determining, according to the currently acquired link quality information of each link in the first AS, a path used by a first network node to forward traffic to each second network node.

In this embodiment, the link quality information of each link includes an individual link quality index of each link, or, the link quality information of each link includes an index reference value calculated according to an individual dynamic link quality index of each link. The link quality index includes one or more dynamic link quality indexes. The second network node is a network node other than the first network node in the first AS.

Optionally, the dynamic link quality index may include a remaining bandwidth, a packet error rate, a packet loss rate, a delay, and a jitter. The dynamic link quality index may further include an extended dynamic link quality index such as a packet loss rate for an oversized packet (a packet exceeding 1500 bytes), and the present invention is not limited thereto.

Optionally, the link quality information may further include one or more static link quality indexes.

Optionally, the static link quality index may include a cost value and a bandwidth.

It may be understood that when the link quality information of each link includes the index reference value calculated according to the individual dynamic link quality index of each link, the volume of the link quality information does not increase as the number of the included link quality indexes increases; compared with that the link quality information of each link includes an individual link quality index of each link, and the link quality index includes one or more dynamic link quality indexes, network traffic load and processing load of a network node receiving link quality information can be reduced.

In an actual application, a dynamic routing protocol used in the apparatus may be the OSPF protocol or the ISIS protocol, a dynamic routing protocol used in the apparatus may also be the CSPF protocol, and a dynamic routing protocol used in the apparatus may further be the BGP protocol.

Further, the processor 133 may implement: selecting, from multiple link quality indexes, a link quality index as a datum for conversion; converting other pieces of link quality information of multiple pieces of link quality information according to the datum, where the other pieces of link quality information are link quality information other than the link quality information serving as the datum for conversion of the multiple pieces of link quality information; and calculating, according to configured weights, a weighted sum of the link quality index serving as the datum for conversion and the converted other link quality indexes, so as to obtain the index reference value of each link.

Further, the processor 133 may implement: acquiring the configured weights, where weights corresponding to some of the multiple link quality indexes are 0 or none of weights corresponding to the multiple link quality indexes is 0.

It should be noted that in the present invention, a weight of at least one dynamic link quality index of the multiple link quality indexes is not 0.

Further, the processor 133 may implement: acquiring the link quality information of a link used by the first network node to forward traffic; controlling the network interface 131 to send an LSA or LSP to a neighboring node of the first network node, where the LSA or LSP sent by the first network node includes the link quality information, which is currently acquired by the first network node, of the link used by the first network node to forward traffic, and the neighboring node of the first network node is a network node interconnected to the first network node; controlling the network interface 131 to receive an LSA or LSP sent by the neighboring node of the first network node, where the LSA or LSP sent by the neighboring node of the first network node includes link quality information, which is currently acquired by the neighboring node of the first network node, of a link used by the neighboring node of the first network node to forward traffic, or link quality information, which is currently acquired by other network nodes, of links used by the other network nodes to forward traffic, or link quality information, which is currently acquired by the neighboring node of the first network node, of a link used by the neighboring node of the first network node to forward traffic and link quality information of links used by other network nodes to forward traffic, where the other network nodes are network nodes other than the first network node and the neighboring node of the first network node in the first AS; and controlling the network interface 131 to send the LSA or LSP sent by the neighboring node of the first network node.

Further, the processor 133 may implement: controlling the network interface 131 to send the LSA or LSP to the neighboring node of the first network node at intervals of a set time.

Further, the processor 133 may implement that: when an absolute value of a difference between one or more currently acquired link quality indexes (link quality information) of the link used by the first network node to forward traffic and one or more link quality indexes (link quality information), which are acquired last time, of the link used by the first network node to forward traffic is less than or equal to a first preset value, the sent LSA or LSP may further include an omission mark, where the omission mark is used for instructing the neighboring node of the first network node to discard the LSA or LSP.

Optionally, the first preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the first preset value.

Further, the processor 133 may implement: controlling the network interface 131 to, within the set time, when the absolute value of the difference between the one or more currently acquired link quality indexes (link quality information) of the link used by the first network node to forward traffic and the one or more link quality indexes (link quality information), which are acquired last time, of the link used by the first network node to forward traffic is greater than a second preset value, send the LSA or LSP to the neighboring node of the first network node.

Optionally, the second preset value equals a product of multiplying a set ratio by one or more link quality indexes, which are acquired last time, of the link used by the first network node to forward traffic, and the set ratio is greater than 0 and less than 1, for example, 10%.

Further, the set ratio may be modified according to a network condition, so as to modify the second preset value.

It should be noted that, after the LSA or LSP is sent to the neighboring node of the first network node within the set time, the first network node restarts to count time. For example, the set time is 1800 seconds, and when the counted time reaches 1000 seconds, the first network node sends the LSA or LSP to the neighboring node of the first network node; in this case, the first network node restarts to count time from 0.

It may be understood that within the set time, when an absolute value of a difference between one or more currently acquired link quality indexes (link quality information) of the link used by the first network node to forward traffic and one or more link quality indexes (link quality information), which are acquired last time, of the link used by the first network node to forward traffic is greater than the second preset value, the LSA or LSP is sent to the neighboring node of the first network node, and the first network node may forward the LSA or LSP to other network nodes in time; therefore, the network nodes in the first AS can perform path calculation in time according to the LSA or LSP, so that a link having a poor dynamic link quality index is avoided in time and network adaptability is strong.

Further, the processor 133 may implement: when an absolute value of a difference between one or more currently acquired link quality indexes (link quality information) of the link in the first AS and one or more link quality indexes (link quality information), which are acquired last time, of the link in the first AS is greater than a third preset value, calculating, according to the one or more currently acquired link quality indexes of the link in the first AS, the path used by the first network node to forward traffic to each second network node.

Optionally, the third preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the third preset value.

It may be understood that when the absolute value of the difference between the one or more currently acquired link quality indexes (link quality information) of the link in the first AS and the one or more link quality indexes (link quality information), which are acquired last time, of the link in the first AS is greater than the third preset value, the path used by the first network node to forward traffic to each second network node is calculated according to the one or more currently acquired link quality indexes of the link in the first AS, so as to avoid frequent calculation for a path when link quality information changes frequently, thereby saving resources.

Further, the processor 133 may implement: determining a forwarding entry of the first network node according to the path used by the first network node to forward traffic to each second network node.

Further, the processor 133 may implement: when an absolute value of a difference between path quality information of the currently determined path that is used by the first network node to forward traffic to the currently determined path that is used by the first network node to forward traffic to each second network node and path quality information of a path that is determined last time and is used by the first network node to forward traffic to each second network node is greater than a fourth preset value, determining the forwarding entry of the first network node according to the currently determined path used by the first network node to forward traffic to each second network node, where the path quality information is a sum of the index reference values of the links forming the path.

Optionally, the fourth preset value equals a product of multiplying a set ratio by the path quality information of the path that is determined last time and is used by the first network node to forward traffic to each second network node, and the set ratio is greater than 0 and less than 1, for example, 10%.

Further, the set ratio may be modified according to a network condition, so as to modify the fourth preset value.

It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the forwarding entry of the first network node is determined according to the currently determined path used by the first network node to forward traffic to each second network node, where the path quality information is a sum of the index reference values of the links forming the path, so as to avoid that when the determined path used by the first network node to forward traffic to each second network node changes frequently, the forwarding entry of each network node also changes frequently (an actual path for traffic forwarding changes frequently), which further makes the network unstable.

Further, the processor 133 may implement: filtering, according to a constraint of the link quality information, the currently acquired link quality information of each link in the first AS, so as to obtain link quality information meeting the constraint; and determining, according to the link quality information meeting the constraint, the path used by the first network node to forward traffic to each second network node.

Further, the processor 133 may implement: determining whether path quality information of the path used by the first network node to forward traffic to each second network node meets a constraint of the path quality information, where the path quality information of the path is a sum of reference index values of the links forming the path; and determining, according to the path, of which path quality information meets the constraint of the path quality information, used by the first network node to forward traffic to each second network node, the forwarding entry of the first network node.

Further, the processor 133 may implement: controlling the network interface 131 to send BGP routing information to an edge node in a second AS, where the BGP routing information sent by the first network node includes path quality information of the path used by the first network node to forward traffic to each second network node, the second AS is an AS, which is connected to the first AS, of multiple AS, and the path quality information is a sum of the index reference values of the links forming the path.

Further, the processor 133 may implement: controlling the network interface 131 to receive the BGP routing information sent by the edge node of the second AS, where the BGP routing information sent by the edge node of the second AS includes path quality information of a path used by the edge node of the second AS to forward traffic to each third network node, where the third network node is a network node, other than the edge node of the second AS, in the second AS; and determine, according to the path quality information of the path used by the edge node of the second AS to forward traffic to each third network node, a path used to forward traffic from the first network node to the third network node.

Further, the processor 133 may implement: when the absolute value of the difference between the path quality information of the currently determined path that is used by the first network node to forward traffic to each second network node and the path quality information of the path that is determined last time and is used by the first network node to forward traffic to each second network node is greater than the fourth preset value, sending, to the edge node in the second AS, the path quality information of the path used by the first network node to forward traffic to each second network node.

Optionally, the fourth preset value equals a product of multiplying a set ratio by the path quality information of the path that is determined last time and is used by the first network node to forward traffic to each second network node, and the set ratio is greater than 0 and less than 1, for example, 10%.

Further, the set ratio may be modified according to a network condition, so as to modify the fourth preset value.

It may be understood that when the absolute value of the difference between the path quality information of the currently determined path that is used by the first network node to forward traffic to each second network node and the path quality information of the path that is determined last time and is used by the first network node to forward traffic to each second network node is greater than the fourth preset value, the path quality information of the path used by the first network node to forward traffic to each second network node is sent to the edge node in the second AS, so as to avoid that when the path used by the first network node to forward traffic to each second network node changes frequently, the forwarding entry of the first network node also changes frequently (an actual path for traffic forwarding changes frequently), which further makes the network unstable.

In this embodiment of the present invention, link quality information of each link in a first AS is acquired, where the link quality information of each link includes an individual link quality index of each link, and the link quality index includes one or more dynamic link quality indexes, and a path used by a first network node to forward traffic to each second network node is determined according to the link quality information of each link in the first AS, and therefore, the path used by the first network node to forward traffic to each second network node may change according to a change of the dynamic link quality index. When a quality fault occurs in a link, the dynamic link quality index of the link changes, the path that is determined according to the dynamic link quality index of the link and used by the first network node to forward traffic to each second network node also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, before a forwarding entry of the first network node is determined, the link quality information of each link in the first AS is filtered according to a constraint of the link quality information, so as to obtain link quality information meeting the constraint, or, it is determined whether path quality information of the path used by the first network node to forward traffic to each second network node meets a constraint of the path quality information, and therefore the forwarding entry of the first network node may be determined according to a requirement for the link quality information or the path quality information. In addition, path quality information of a path used by a network node of the first AS to forward traffic may be sent to an edge node, which is connected to the network node, of a second AS, path quality information of a path used by the edge node of the second AS to forward traffic is received, and a path used by the network node to forward traffic to a network node of the second AS is determined, thereby implementing determining of a path used to forward traffic between multiple ASs.

Embodiment 13

An embodiment of the present invention provides an apparatus for determining a traffic forwarding path, where the apparatus is disposed on a network management device, and the network management device is independent from each network node. Referring to FIG. 14, the apparatus includes:

an information acquiring module 1201, configured to acquire link quality information of each link in a first AS; and
a path determining module 1202, configured to determine, according to the currently acquired link quality information of each link in the first AS, a path used by each network node in the first AS to forward traffic in the first AS.

In this embodiment, the link quality information of each link includes an individual link quality index of each link, or, the link quality information of each link includes an index reference value calculated according to the individual link quality index of each link. The link quality index includes one or more dynamic link quality indexes. The path used by each network node in the first AS to forward traffic in the first AS is a path used by each network node in the first AS to forward traffic to a network node other than the network node in the first AS.

Specifically, the dynamic link quality index may include a remaining bandwidth, a packet error rate, a packet loss rate, a delay, and a jitter. The dynamic link quality index may further include an extended dynamic link quality index such as a packet loss rate for an oversized packet (a packet exceeding 1500 bytes), and the present invention is not limited thereto.

Optionally, the link quality information may further include one or more static link quality indexes.

Specifically, the static link quality index may include a cost value and a bandwidth.

In an actual application, a dynamic routing protocol used in the apparatus may be the OSPF protocol or the ISIS protocol, a dynamic routing protocol used in the apparatus may also be the CSPF protocol, and a dynamic routing protocol used in the apparatus may further be the BGP protocol.

In this embodiment of the present invention, link quality information of each link in a first AS is acquired, where the link quality information of each link includes an individual link quality index of each link, and the link quality index includes one or more dynamic link quality indexes, or, the link quality information of each link includes an index reference value calculated according to the individual link quality index of each link, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

Embodiment 14

In this embodiment, an apparatus for determining a traffic forwarding path provided in Embodiment 13 is described in detail. Referring to FIG. 15, the apparatus includes:

an information acquiring module 1301, configured to acquire link quality information of each link in a first AS;
a path determining module 1302, configured to determine, according to the currently acquired link quality information of each link in the first AS, a path used by each network node in the first AS to forward traffic in the first AS; and
a path output module 1303, configured to output the path used by each network node in the first AS to forward traffic in the first AS as a reference for configuring an actual path used by each network node in the first AS to forward traffic in the first AS.

Optionally, the path determining module 1302 may be the same as a path determining module 902 in Embodiment 9, and details are not repeatedly described herein.

In an implementation manner of this embodiment, the information acquiring module 1301 may be configured to:

when an LSA or LSP sent by a network node in the first AS includes a dynamic link quality index, acquire, from the network node in the first AS, the dynamic link quality index of each link in the first AS; or,
detect the dynamic link quality index of each link in the first AS.

It should be noted that in the OSPF protocol, an LSA carries link quality information, and in the ISIS protocol, an LSP carries link quality information.

Optionally, when the link quality index further includes one or more static link quality indexes, the information acquiring module 1301 may further be configured to:

acquire, from the network node in the first AS, the static link quality index of each link in the first AS; or,
acquire the static link quality index, which is stored in a network management device, of each link in the first AS.

Exemplarily, the path determining module 1302 may be configured to:

when an absolute value of a difference between the currently acquired link quality information of each link in the first AS and link quality information, which is acquired last time, of each link in the first AS is greater than a fifth preset value, calculate, according to the currently acquired link quality information of each link in the first AS, the path used by each network node in the first AS to forward traffic in the first AS.

Optionally, the fifth preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the fifth preset value.

It may be understood that when an absolute value of a difference between one or more currently acquired link quality indexes (link quality information) of the link in the first AS and one or more link quality indexes (link quality information), which are acquired last time, of the link in the first AS is greater than the fifth preset value, a path used by a first network node to forward traffic to each second network node is calculated according to the one or more currently acquired link quality indexes of the link in the first AS, so as to avoid frequent calculation for a path when link quality information changes frequently, thereby saving resources.

Exemplarily, the path output module 1303 may be configured to:

when an absolute value of a difference between path quality information of the currently determined path that is used by each network node in the first AS to forward traffic in the first AS and path quality information of the path which is determined last time and is used by each network node in the first AS to forward traffic in the first AS is greater than a sixth preset value, output the currently determined path that is used by each network node in the first AS to forward traffic in the first AS as the reference for configuring the actual path used by each network node in the first AS to forward traffic in the first AS, where the path quality information is a sum of index reference values of the links forming the path.

Optionally, the sixth preset value equals a product of multiplying a set ratio by the path quality information of the path that is determined last time and is used by each network node in the first AS to forward traffic in the first AS, and the set ratio is greater than 0 and less than 1, for example, 10%.

Further, the set ratio may be modified according to a network condition, so as to modify the sixth preset value.

It may be understood that when the absolute value of the difference between the path quality information of the currently determined path that is used by each network node in the first AS to forward traffic in the first AS and the path quality information of the path that is determined last time and is used by each network node in the first AS to forward traffic in the first AS is greater than the sixth preset value, the currently determined path that is used by each network node in the first AS to forward traffic in the first AS is output as the reference for configuring the actual path used by each network node in the first AS to forward traffic in the first AS, so as to avoid that when the path used by each network node in the first AS to forward traffic in the first AS changes frequently, the determined path used by each network node in the first AS to forward traffic in the first AS is frequently output, which makes the network unstable; and so as also to reduce a workload of a network administrator.

In another implementation manner of this embodiment, the path output module 1303 may further be configured to:

output the path quality information of the path used by each network node in the first AS to forward traffic in the first AS.

It may be understood that in this embodiment, the network administrator eventually decides the actual path used by each network node in the first AS to forward traffic in the first AS, and the actual path used to forward traffic does not change by itself according to a change of link quality, thereby ensuring network stability. Specifically, the network administrator may decide, according to a priority condition (for example, a degree by which a packet loss rate is lowered) of the path used by each network node in the first AS to forward traffic in the first AS, whether to use the path used by each network node in the first AS to forward traffic in the first AS to configure the actual path used by each network node in the first AS to forward traffic in the first AS. In addition, the network administrator may configure, according to a "Make before Break" (Make before Break) principle, the actual path used by each network node in the first AS to forward traffic in the first AS, that is, before deleting an original path, first creates a new path and adjusts traffic to the new path for forwarding.

In still another implementation manner of this embodiment, the information acquiring module 1301 may further be configured to acquire link quality information of each link in a second AS; and
the path determining module 1302 may further be configured to determine, according to the link quality information of each link in the second AS, a path used by each network node in the first AS to forward traffic to a network node in the second AS.

In an implementation manner of this embodiment, the apparatus may further include:

an information filtering module, configured to filter, according to a constraint of the link quality information, the link quality information of each link in the first AS, so as to obtain link quality information meeting the constraint.

Correspondingly, the path determining module 1302 is configured to determine, according to the link quality information meeting the constraint, the path used by the first network node to forward traffic to each second network node.

Optionally, the information filtering module may be the same as an information filtering module 1004 in Embodiment 10, and details are not repeatedly described herein.

In another implementation manner of this embodiment, the apparatus may further include:

a path judging module, configured to determine whether path quality information of the path used by the first network node to forward traffic to each second network node meets a constraint of the path quality information, where the path quality information of the path is a sum of reference index values of the links forming the path.

Optionally, the path judging module may be the same as a path judging module 1005 in Embodiment 10, and details are not repeatedly described herein.

In this embodiment of the present invention, link quality information of each link in a first AS is acquired, where the link quality information of each link includes an individual link quality index of each link, and the link quality index includes one or more dynamic link quality indexes, or, the link quality information of each link includes an index reference value calculated according to the individual link quality index of each link, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

Embodiment 15

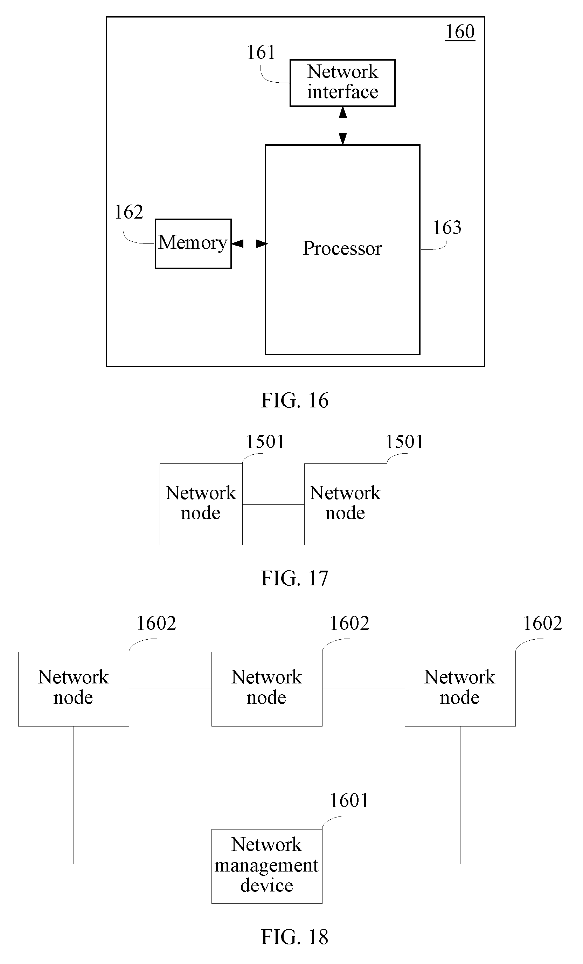

An embodiment of the present invention provides an apparatus for determining a traffic forwarding path. The apparatus may be, for example, a server or a personal computer. Referring to FIG. 16, the apparatus includes: a network interface 161, a memory 162, and a processor 163 (for example, a CPU), and may be configured to execute a method in Embodiment 6 or Embodiment 7.

Each constituent part of the apparatus 160 for determining a traffic forwarding path is introduced in detail below with reference to FIG. 16:

The memory 162 may be configured to store a software program and an application module. The processor 163 runs the software program and application module stored in the memory 162, so as to execute various functional applications and data processing of the apparatus 160 for determining a traffic forwarding path. The memory 162 may mainly include a program storage area and a data storage area, where the program storage area may store an operating system, an application program required for at least one function, and the like, and the data storage area may store data (for example, path quality information) that is created according to processing of the apparatus 160 for determining a traffic forwarding path, and the like. In addition, the memory 162 may include a high-speed RAM (Random Access Memory, random access memory), and may further include a non-volatile memory (non-volatile memory), for example, at least one disk storage device, a flash memory device, or other volatile solid-state storage devices.

The processor 163 is a control center of the apparatus 160 for determining a traffic forwarding path, and is connected to all parts of the entire apparatus 160 for determining a traffic forwarding path by using various interfaces and circuits.

Specifically, the processor 163 runs or executes the software program and application module stored in the memory 162 and invokes data stored in the memory 162, so that the processor 163 can implement: acquiring link quality information of each link in a first AS; and determining, according to the currently acquired link quality information of each link in the first AS, a path used by each network node in the first AS to forward traffic in the first AS.

In this embodiment, the link quality information of each link includes an individual link quality index of each link, or, the link quality information of each link includes an index reference value calculated according to the individual link quality index of each link. The link quality index includes one or more dynamic link quality indexes. The path used by each network node in the first AS to forward traffic in the first AS is a path used by each network node in the first AS to forward traffic to a network node other than the network node in the first AS.

Specifically, the dynamic link quality index may include a remaining bandwidth, a packet error rate, a packet loss rate, a delay, and a jitter. The dynamic link quality index may further include an extended dynamic link quality index such as a packet loss rate for an oversized packet (a packet exceeding 1500 bytes), and the present invention is not limited thereto.

Optionally, the link quality information may further include one or more static link quality indexes.

Specifically, the static link quality index may include a cost value and a bandwidth.

In an actual application, a dynamic routing protocol used in the apparatus may be the OSPF protocol or the ISIS protocol, a dynamic routing protocol used in the apparatus may also be the CSPF protocol, and a dynamic routing protocol used in the apparatus may further be the BGP protocol.

Further, the processor 163 may implement: when an LSA or LSP sent by a network node in the first AS includes a dynamic link quality index, acquiring, from the network node in the first AS, the dynamic link quality index of each link in the first AS; or, detecting the dynamic link quality index of each link in the first AS.

It should be noted that in the OSPF protocol, an LSA carries link quality information, and in the ISIS protocol, an LSP carries link quality information.

Further, the processor 163 may implement: when the link quality index further includes one or more static link quality indexes, acquiring, from the network node in the first AS, the static link quality index of each link in the first AS; or, acquiring the static link quality index, which is stored in a network management device, of each link in the first AS.

Exemplarily, the processor 163 may implement: when an absolute value of a difference between the currently acquired link quality information of each link in the first AS and link quality information, which is acquired last time, of each link in the first AS is greater than a fifth preset value, calculating, according to the currently acquired link quality information of each link in the first AS, the path used by each network node in the first AS to forward traffic in the first AS.

Optionally, the fifth preset value equals a product of multiplying a set ratio by one or more link quality indexes (link quality information), which are acquired last time, of the link in the first AS, and the set ratio is greater than 0 and less than 1, for example, 10%.

Further, the set ratio may be modified according to a network condition, so as to modify the fifth preset value.

It may be understood that when an absolute value of a difference between one or more currently acquired link quality indexes (link quality information) of the link in the first AS and one or more link quality indexes (link quality information), which are acquired last time, of the link in the first AS is greater than the fifth preset value, a path used by a first network node to forward traffic to each second network node is calculated according to the one or more currently acquired link quality indexes of the link in the first AS, so as to avoid frequent calculation for a path when link quality information changes frequently, thereby saving resources.

Exemplarily, the processor 163 may implement: when an absolute value of a difference between path quality information of the currently determined path that is used by each network node in the first AS to forward traffic in the first AS and path quality information of the path which is determined last time and is used by each network node in the first AS to forward traffic in the first AS is greater than a sixth preset value, outputting the currently determined path that is used by each network node in the first AS to forward traffic in the first AS as a reference for configuring an actual path used by each network node in the first AS to forward traffic in the first AS, where the path quality information is a sum of the index reference values of the links forming the path.

Optionally, the sixth preset value equals a product of multiplying a set ratio by the path quality information of the path that is determined last time and is used by each network node in the first AS to forward traffic in the first AS, and the set ratio is greater than 0 and less than 1, for example, 10%.

Further, the set ratio may be modified according to a network condition, so as to modify the sixth preset value.

It may be understood that when the absolute value of the difference between the path quality information of the currently determined path that is used by each network node in the first AS to forward traffic in the first AS and the path quality information of the path that is determined last time and is used by each network node in the first AS to forward traffic in the first AS is greater than the sixth preset value, the currently determined path that is used by each network node in the first AS to forward traffic in the first AS is output as the reference for configuring the actual path used by each network node in the first AS to forward traffic in the first AS, so as to avoid that when the path used by each network node in the first AS to forward traffic in the first AS changes frequently, the determined path used by each network node in the first AS to forward traffic in the first AS is frequently output, which makes the network unstable; and so as also to reduce a workload of a network administrator.

Further, the processor 163 may implement: outputting the path used by each network node in the first AS to forward traffic in the first AS as the reference for configuring the actual path used by each network node in the first AS to forward traffic in the first AS.

Further, the processor 163 may implement: outputting the path quality information of the path used by each network node in the first AS to forward traffic in the first AS.

It may be understood that in this embodiment, the network administrator eventually decides the actual path used by each network node in the first AS to forward traffic in the first AS, and the actual path used to forward traffic does not change by itself according to a change of link quality, thereby ensuring network stability. Specifically, the network administrator may decide, according to a priority condition (for example, a degree by which a packet loss rate is lowered) of the path used by each network node in the first AS to forward traffic in the first AS, whether to use the path used by each network node in the first AS to forward traffic in the first AS to configure the actual path used by each network node in the first AS to forward traffic in the first AS. In addition, the network administrator may configure, according to a "Make before Break" (Make before Break) principle, the actual path used by each network node in the first AS to forward traffic in the first AS, that is, before deleting an original path, first creates a new path and adjusts traffic to the new path for forwarding.

Further, the processor 163 may implement: acquiring link quality information of each link in a second AS; and determining, according to the link quality information of each link in the second AS, a path used by each network node in the first AS to forward traffic to a network node in the second AS.

Further, the processor 163 may implement: filtering, according to a constraint of the link quality information, the link quality information of each link in the first AS, so as to obtain link quality information meeting the constraint; and determining, according to the link quality information meeting the constraint, the path used by the first network node to forward traffic to each second network node.

Further, the processor 163 may implement: determining whether path quality information of the path used by the first network node to forward traffic to each second network node meets a constraint of the path quality information, where the path quality information of the path is a sum of reference index values of the links forming the path.

In this embodiment of the present invention, link quality information of each link in a first AS is acquired, where the link quality information of each link includes an individual link quality index of each link, and the link quality index includes one or more dynamic link quality indexes, or, the link quality information of each link includes an index reference value calculated according to the individual link quality index of each link, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

Embodiment 16

An embodiment of the present invention provides a communications system. Referring to FIG. 17, the system includes at least two network nodes 1501, and an apparatus for determining a traffic forwarding path provided in any one of Embodiment 8 to Embodiment 12 is disposed on the network node 1501.

In this embodiment of the present invention, link quality information of each link in a first AS is acquired, where the link quality information of each link includes an individual link quality index of each link, and the link quality index includes one or more dynamic link quality indexes, or, the link quality information of each link includes an index reference value calculated according to the individual link quality index of each link, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good.

Embodiment 17

An embodiment of the present invention provides a communications system. Referring to FIG. 18, the system includes a network management device 1601 and multiple network nodes 1602. An apparatus for determining a traffic forwarding path provided in any embodiment of Embodiment 13 to Embodiment 15 is disposed on the network management device 1601.

In this embodiment of the present invention, link quality information of each link in a first AS is acquired, where the link quality information of each link includes an individual link quality index of each link, and the link quality index includes one or more dynamic link quality indexes, or, the link quality information of each link includes an index reference value calculated according to the individual link quality index of each link, and a path used by each network node in the first AS to forward traffic in the first AS is determined according to the link quality information of each link in the first AS, and therefore the path used by each network node in the first AS to forward traffic in the first AS may change according to a change of the dynamic link quality index. When a quality fault occurs in a link, the dynamic link quality index of the link changes, the path that is determined according to the dynamic link quality index of the link and is used by each network node in the first AS to forward traffic in the first AS also changes accordingly, and instead of continuously being forwarded by using the link encountering the quality fault, traffic that is originally forwarded by using the link is forwarded by using another link having a better dynamic link quality index, so that a success rate of traffic forwarding is increased and network adaptability is relatively good. Moreover, all processes of each network node are implemented by a network management device independent from each network node, and it is unnecessary for each network node to calculate a path to each network node once, thereby saving a system overhead.

It should be noted that when the apparatuses for determining a traffic forwarding path provided in the foregoing embodiments determine a traffic forwarding path, the foregoing division of the functional modules is only used as an example for description. In an actual application, the foregoing functions can be allocated to different modules and implemented according to a requirement, that is, an inner structure of an apparatus is divided into different function modules to implement all or some of the functions described above. In addition, the apparatuses for determining a traffic forwarding path provided in the foregoing embodiments and the embodiments of the methods for determining a traffic forwarding path belong to a same concept; refer to the method embodiments for details of the specific implementation processes of the apparatuses, which are no longer elaborated herein.

The sequence numbers of the above embodiments of the present invention are merely for description, and do not imply the preference among the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

**Claims**

1. A method for determining a traffic forwarding path, wherein the method comprises:

   acquiring, by a first network node, link quality information of each link in a first autonomous system, wherein the first network node is a network node in the first autonomous system, the link quality information of each link comprises an individual link quality index of each link, or, the link quality information of each link comprises an index reference value calculated according to the individual link quality index of each link, wherein the link quality index comprises one or more dynamic link quality indexes; and
   determining, according to the currently acquired link quality information of each link in the first autonomous system, a path used by the first network node to forward traffic to each second network node, wherein the second network node is a network node other than the first network node in the first autonomous system.

2. The method according to claim 1, wherein the dynamic link quality index comprises a remaining bandwidth, a packet error rate, a packet loss rate, a delay, and a jitter.

**3.** The method according to claim 1, wherein the link quality index further comprises one or more static link quality indexes, the static link quality index comprises a cost value and a bandwidth, and the cost value is used for representing a quantity of consumable resources of a link.

**4.** The method according to claim 1, wherein the index reference value of each link is calculated by using the following method:

selecting, from multiple link quality indexes, a link quality index as a datum for conversion;
converting other link quality indexes of the multiple link quality indexes according to the datum; and
calculating, according to configured weights, a weighted sum of the link quality index serving as the datum for conversion and the converted other link quality indexes, so as to obtain the index reference value of each link.

**5.** The method according to any one of claims 1 to 4, wherein the acquiring link quality information of each link in a first autonomous system comprises:

acquiring a link quality information of a link used by the first network node to forward traffic; and
receiving a link state advertisement or link state packet sent by a neighboring node of the first network node, wherein the link state advertisement or link state packet sent by the neighboring node of the first network node comprises any one or two of the following: a link quality information, which is currently acquired by the neighboring node of the first network node, of a link used by the neighboring node of the first network node to forward traffic, and the link quality information, which is currently acquired by other network nodes, of links used by the other network nodes to forward traffic, and the other network nodes are network nodes other than the first network node and the neighboring node of the first network node in the first autonomous system.

**6.** The method according to claim 5, wherein the method further comprises:

sending a link state advertisement or link state packet to the neighboring node of the first network node, wherein the link state advertisement or link state packet sent by the first network node comprises any one or two of the following: the link quality information, which is currently acquired by the first network node, of the link used by the first network node to forward traffic, and the link quality information, which is currently acquired by the other network nodes, of the links used by the other network nodes to forward traffic.

**7.** The method according to any one of claims 1 to 4, wherein after the determining, according to the currently acquired link quality information of each link in the first autonomous system, a path used by the first network node to forward traffic to each second network node, the method further comprises:

determining whether path quality information of the path used by the first network node to forward traffic to each second network node meets a constraint of the path quality information, wherein the path quality information is a sum of the index reference values of the links forming the path; and
determining a forwarding entry of the first network node according to the path, of which path quality information meets the constraint of the path quality information, used by the first network node to forward traffic to each second network node, wherein the forwarding entry comprises a next-hop network node of the first network node in the path used by the first network node to forward traffic to each second network node.

**8.** A method for determining a traffic forwarding path, wherein the method comprises:

acquiring, by a network management device, link quality information of each link in a first autonomous system, wherein the link quality information of each link comprises an individual link quality index of each link, or, the link quality information of each link comprises an index reference value calculated according to the individual link quality index of each link, wherein the link quality index comprises one or more dynamic link quality indexes; and
determining, according to the currently acquired link quality information of each link in the first autonomous system, a path used by each network node in the first autonomous system to forward traffic in the first autonomous system.

**9.** The method according to claim 8, wherein the dynamic link quality index comprises a remaining bandwidth, a packet error rate, a packet loss rate, a delay, and a jitter.

10. The method according to claim 8, wherein the link quality index further comprises one or more static link quality indexes, and the static link quality index comprises a cost value and a bandwidth.

11. The method according to any one of claims 8 to 10, wherein the acquiring link quality information of each link in a first autonomous system comprises:

when a link state advertisement or link state packet sent by a network node in the first autonomous system comprises the dynamic link quality index, acquiring, from the network node in the first autonomous system, the dynamic link quality index of each link in the first autonomous system; or,
detecting the dynamic link quality index of each link in the first autonomous system.

12. The method according to claim 11, wherein when the link quality index further comprises one or more static link quality indexes, the acquiring link quality information of each link in a first autonomous system further comprises:

acquiring, from the network node in the first autonomous system, the static link quality index of each link in the first autonomous system; or,
acquiring the static link quality index, which is stored in the network management device, of each link in the first autonomous system.

13. The method according to any one of claims 8 to 10, wherein when the link quality information comprise multiple link quality indexes, the determining, according to the currently acquired link quality information of each link in the first autonomous system, a path used by each network node in the first autonomous system to forward traffic in the first autonomous system comprises:

selecting, from multiple link quality indexes, a link quality index as a datum for conversion;
converting other link quality indexes of the multiple link quality indexes according to the datum;
calculating, according to configured weights, a weighted sum of the link quality index serving as the datum for conversion and the converted other link quality indexes, so as to obtain the index reference value of each link; and
calculating, according to the index reference value of each link, the path used by each network node to forward traffic in the first autonomous system.

14. The method according to any one of claims 8 to 10, wherein the method further comprises:

after the determining, according to the currently acquired link quality information of each link in the first autonomous system, a path used by each network node in the first autonomous system to forward traffic in the first autonomous system, determining whether path quality information of the path used by each network node in the first autonomous system to forward traffic in the first autonomous system meets a constraint of the path quality information, wherein the path quality information is a sum of the index reference values of the links forming the path; and
determining, according to the path, of which path quality information meets the constraint of the path quality information, used by a first network node to forward traffic to each second network node, a forwarding entry of the first network node, wherein the forwarding entry comprises a network node, which directly receives traffic sent by the first network node, in the path used by the first network node to forward traffic to each second network node.

15. An apparatus for determining a traffic forwarding path, wherein the apparatus is disposed on a first network node, the first network node is a network node in a first autonomous system, and the apparatus comprises:

an information acquiring module, configured to acquire link quality information of each link in the first autonomous system, wherein the first network node is a network node in the first autonomous system, the link quality information of each link comprises an individual link quality index of each link, or, the link quality information of each link comprises an index reference value calculated according to the individual link quality index of each link, wherein the link quality index comprises one or more dynamic link quality indexes; and
a path determining module, configured to determine, according to the currently acquired link quality information of each link in the first autonomous system, a path used by the first network node to forward traffic to each second network node, wherein the second network node is a network node other than the first network node in the first autonomous system.

16. The apparatus according to claim 15, wherein the dynamic link quality index comprises a remaining bandwidth, a packet error rate, a packet loss rate, a delay, and a jitter.

17. The apparatus according to claim 15, wherein the link quality index further comprises one or more static link quality indexes, the static link quality index comprises a cost value and a bandwidth, and the cost value is used for representing a quantity of consumable resources of a link.

18. The apparatus according to claim 15, wherein the information acquiring module or the path determining module is configured to:

   select, from multiple link quality indexes, a link quality index as a datum for conversion;
   convert other link quality indexes of the multiple link quality indexes according to the datum; and
   calculate, according to configured weights, a weighted sum of the link quality index serving as the datum for conversion and the converted other link quality indexes, so as to obtain the index reference value of each link.

19. The apparatus according to any one of claims 15 to 18, wherein the information acquiring module comprises:

   an acquiring unit, configured to acquire a link quality information of a link used by the first network node to forward traffic; and
   a receiving unit, configured to receive a link state advertisement or link state packet sent by a neighboring node of the first network node, wherein the link state advertisement or link state packet sent by the neighboring node of the first network node comprises any one or two of the following: a link quality information, which is currently acquired by the neighboring node of the first network node, of a link used by the neighboring node of the first network node to forward traffic, and the link quality information, which is currently acquired by other network nodes, of links used by the other network nodes to forward traffic, and the other network nodes are network nodes other than the first network node and the neighboring node of the first network node in the first autonomous system.

20. The apparatus according to claim 19, wherein the apparatus further comprises:

   a sending unit, configured to send a link state advertisement or link state packet to the neighboring node of the first network node, wherein the link state advertisement or link state packet sent by the first network node comprises any one or two of the following: the link quality information, which is currently acquired by the first network node, of the link used by the first network node to forward traffic, and the link quality information, which is currently acquired by the other network nodes, of the links used by the other network nodes to forward traffic.

21. The apparatus according to any one of claims 15 to 18, wherein the apparatus further comprises:

   a path judging module, configured to determine whether path quality information of the path used by the first network node to forward traffic to each second network node meets a constraint of the path quality information, wherein the path quality information is a sum of the index reference values of the links forming the path; and
   a forwarding entry determining module, configured to determine a forwarding entry of the first network node according to the path, of which path quality information meets the constraint of the path quality information, used by the first network node to forward traffic to each second network node, wherein the forwarding entry comprises a next-hop network node of the first network node in the path used by the first network node to forward traffic to each second network node.

22. An apparatus for determining a traffic forwarding path, wherein the apparatus is disposed on a network management device, and the apparatus comprises:

   an information acquiring module, configured to acquire link quality information of each link in a first autonomous system, wherein the link quality information of each link comprises an individual link quality index of each link, or, the link quality information of each link comprises an index reference value calculated according to the individual link quality index of each link, wherein the link quality index comprises one or more dynamic link quality indexes; and
   a path determining module, configured to determine, according to the currently acquired link quality information of each link in the first autonomous system, a path used by each network node in the first autonomous system to forward traffic in the first autonomous system.

**23.** The apparatus according to claim 22, wherein the dynamic link quality index comprises a remaining bandwidth, a packet error rate, a packet loss rate, a delay, and a jitter.

**24.** The apparatus according to claim 22, wherein the link quality index further comprises one or more static link quality indexes, the static link quality index comprises a cost value and a bandwidth.

**25.** The apparatus according to any one of claims 22 to 24, wherein the information acquiring module is configured to:

when a link state advertisement or link state packet sent by a network node in the first autonomous system comprises the dynamic link quality index, acquire, from the network node in the first autonomous system, the dynamic link quality index of each link in the first autonomous system; or, detect the dynamic link quality index of each link in the first autonomous system.

**26.** The apparatus according to claim 25, wherein when the link quality index further comprises one or more static link quality indexes, the information acquiring module is further configured to:

acquire, from the network node in the first autonomous system, the static link quality index of each link in the first autonomous system; or, acquire the static link quality index, which is stored in the network management device, of each link in the first autonomous system.

**27.** The apparatus according to any one of claims 22 to 24, wherein the path determining module is configured to:

select, from multiple link quality indexes, a link quality index as a datum for conversion; convert other link quality indexes of the multiple link quality indexes according to the datum; calculate, according to configured weights, a weighted sum of the link quality index serving as the datum for conversion and the converted other link quality indexes, so as to obtain the index reference value of each link; and calculate, according to the index reference value of each link, the path used by each network node to forward traffic in the first autonomous system.

**28.** The apparatus according to any one of claims 22 to 24, wherein the apparatus further comprises:

a path judging module, configured to: after a path used by each network node in the first autonomous system to forward traffic in the first autonomous system is determined according to the currently acquired link quality information of each link in the first autonomous system, determine whether path quality information of the path used by each network node in the first autonomous system to forward traffic in the first autonomous system meets a constraint of the path quality information, wherein the path quality information is a sum of the index reference values of the links forming the path; and a forwarding entry determining module, configured to determine, according to the path, of which path quality information meets the constraint of the path quality information, used by a first network node to forward traffic to each second network node, a forwarding entry of the first network node, wherein the forwarding entry comprises a network node, which directly receives traffic sent by the first network node, in the path used by the first network node to forward traffic to each second network node.

FIG. 1

FIG. 2

201

Acquire link quality information of each link in a first AS, where the link quality information of each link includes an individual link quality index of each link, and the link quality index includes one or more dynamic link quality indexes

202

Determine, according to the currently acquired link quality information of each link in the first AS, a path used by a first network node to forward traffic to each second network node

203

Determine a forwarding entry of the first network node according to the path used by the first network node to forward traffic to each second network node

FIG. 3

301

Acquire link quality information of each link in a first AS, where the link quality information of each link includes an index reference value calculated according to an individual link quality index of each link, and the link quality index includes one or more dynamic link quality indexes

302

Determine, according to the currently acquired link quality information of each link in the first AS, a path used by a first network node to forward traffic to each second network node

303

Determine a forwarding entry of the first network node according to the path used by the first network node to forward traffic to each second network node

FIG. 4

401

Acquire link quality information of each link in a first AS

402

Filter, according to a constraint of the link quality information, the currently acquired link quality information of each link in the first AS, so as to obtain link quality information meeting the constraint

403

Determine, according to the link quality information meeting the constraint, a path used by a first network node to forward traffic to each second network node

404

Determine whether path quality information of the path used by the first network node to forward traffic to each second network node meets the constraint of the path quality information

405

Determine a forwarding entry of the first network node according to the path, of which path quality information meets the constraint of the path quality information, used by the first network node to forward traffic to each second network node

FIG. 5

501

Acquire link quality information of each
link in a first AS

502

Determine, according to the currently
acquired link quality information of each
link in the first AS, a path used by a first
network node to forward traffic to each
second network node

503

Send, to an edge node in a
second AS, path quality
information of the path used by
the first network node to
forward traffic to each second
network node

504

Receive path quality
information, which is sent by
the edge node of the second AS,
of a path used by the edge node
of the second AS to forward
traffic to each third network
node

505

Determine, according to the
path quality information of the
path used by the edge node of
the second AS to forward traffic
to each third network node, a
path used to forward traffic
from the first network node to
the third network node

FIG. 6

601

Acquire link quality information of each link in a
first AS

602

Determine, according to the currently acquired link
quality information of each link in the first AS, a
path used by each network node in the first AS to
forward traffic in the first AS

FIG. 7

701

Acquire link quality information of each link in a first AS

702

Determine, according to the currently acquired link quality information of each link in the first AS, a path used by each network node in the first AS to forward traffic in the first AS

703

Output the path used by each network node in the first AS to forward traffic in the first AS as a reference for configuring an actual path used by each network node in the first AS to forward traffic in the first AS

FIG. 8

801                          802

| Information acquiring module | Path determining module |

FIG. 9

901              902              903

| Information acquiring module | Path determining module | Forwarding entry determining module |

FIG. 10

1004

Information
filtering
module

1001

Information
acquiring
module

1002

Path
determining
module

1003

Forwarding
entry
determining
module

1005

Path
judging
module

FIG. 11

1101

Information
acquiring
module

1102

Path
determining
module

1103

Path
sending
module

1104

Path
receiving
module

FIG. 12

130

131 Network interface

132 Memory ↔ Processor 133

FIG. 13

1201 Information acquiring module

1202 Path determining module

FIG. 14

1301 Information acquiring module

1302 Path determining module

1303 Path output module

FIG. 15

FIG. 16

FIG. 17

FIG. 18

**EUROPEAN SEARCH REPORT**

Application Number

EP 15 16 2931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 237 494 A1 (BRITISH TELECOMM [GB]) 6 October 2010 (2010-10-06)<br>* abstract *<br>* paragraph [0009] - paragraph [0014] *<br>* paragraph [0017] - paragraph [0050]; claims 1-9; figures 3,4 *<br>----- | 1-28 | INV.<br>H04L12/707<br>H04L12/725<br>H04L12/723<br>H04L12/721<br>H04L12/26 |
| X | US 2011/085472 A1 (SOMASUNDARAM KIRAN K [US] ET AL) 14 April 2011 (2011-04-14)<br>* abstract *<br>* paragraph [0007] - paragraph [0010] *<br>* paragraph [0022] - paragraph [0030]; claims 1-14; figures 1-8 *<br>----- | 1-28 | |
| X | APOSTOLOPOULUS G ET AL: "QoS Routing Mechanisms and OSPF Extensions", INTERNET CITATION, August 1999 (1999-08), XP002263770, Retrieved from the Internet: URL:http://www.faqs.org/ftp/rfc/pdf/rfc2676.txt.pdf [retrieved on 2003-12-03]<br>* paragraph [0002] - paragraph [03.4] *<br>* paragraph [04.2] - paragraph [0005] *<br>----- | 1-28 | |
| X | WO 2006/102398 A2 (CISCO TECH INC [US]; GUICHARD JAMES N [US]; VASSEUR JEAN-PHILIPPE [US]) 28 September 2006 (2006-09-28)<br>* abstract *<br>* page 4, line 15 - page 7, line 18 *<br>* page 8, line 30 - page 11, line 6 *<br>* page 11, line 17 - page 12, line 3 *<br>* page 13, line 19 - page 18, line 29; claims 1-21; figures 1-8 *<br>-----<br>-/-- | 1-28 | TECHNICAL FIELDS SEARCHED (IPC)<br><br>H04L |

The present search report has been drawn up for all claims

| Place of search | Date of completion of the search | Examiner |
|---|---|---|
| Munich | 27 October 2015 | Todorut, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 15 16 2931

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAIKH A ET AL: "EVALUATING THE IMPACT OF STALE LINKE STATE ON QUALITY-OF-SERVICE ROUTING", IEEE / ACM TRANSACTIONS ON NETWORKING, IEEE / ACM, NEW YORK, NY, US, vol. 9, no. 2, 1 April 2001 (2001-04-01), pages 162-176, XP001053985, ISSN: 1063-6692, DOI: 10.1109/90.917073 * abstract * * page 163, left-hand column, line 23, paragraph 1 - page 174, left-hand column, line 34, paragraph IV * | 1-28 | |
| A | LI Z ET AL: "QRON: QoS-Aware Routing in Overlay Networks", IEEE JOURNAL ON SELECTED AREAS IN COMMUNICATIONS, IEEE SERVICE CENTER, PISCATAWAY, US, vol. 22, no. 1, 1 January 2004 (2004-01-01), pages 29-40, XP011105199, ISSN: 0733-8716, DOI: 10.1109/JSAC.2003.818782 * the whole document * | 1-28 | |
| A | US 2011/058563 A1 (SARAPH GIRISH PRABHAKAR [IN] ET AL) 10 March 2011 (2011-03-10) * abstract * * paragraph [0015] - paragraph [0018]; claims 25-41 * | 1-28 | TECHNICAL FIELDS SEARCHED (IPC) |
| A | EP 1 737 168 A1 (AT & T CORP [US]) 27 December 2006 (2006-12-27) * the whole document * | 1-28 | |

-/--

The present search report has been drawn up for all claims

| Place of search | Date of completion of the search | Examiner |
|---|---|---|
| Munich | 27 October 2015 | Todorut, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 15 16 2931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 914 886 B2 (PELES AMIR [IL] ET AL) 5 July 2005 (2005-07-05) * abstract * * column 1, line 59 - column 3, line 21 * * column 3, line 34 - column 4, line 41 * * column 5, line 14 - line 19 * * column 5, line 41 - line 67 * * column 9, line 10 - column 11, line 36; claims 1-73 * | 1-28 | |
| A | TAMVACLIS C: "QOS DRIVEN ROUTING IN PACKET SWITCHED NETWORKS OF MULTIPLE TRANSMISSION MEDIA", AGARD CONFERENCE PROCEEDINGS, NEUILLY SUR SEINE, FR, 4 October 1993 (1993-10-04), pages 2.1-2.8, XP002067511, ISSN: 0549-7191 * the whole document * | 1-28 | |
| A | US 2013/223229 A1 (HUI JONATHAN W [US] ET AL) 29 August 2013 (2013-08-29) * the whole document * | 1-28 | TECHNICAL FIELDS SEARCHED (IPC) |

The present search report has been drawn up for all claims

| Place of search | Date of completion of the search | Examiner |
|---|---|---|
| Munich | 27 October 2015 | Todorut, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 2931

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2015

| Patent document cited in search report | | Publication date | Patent family member(s) | | Publication date |
|---|---|---|---|---|---|
| EP 2237494 | A1 | 06-10-2010 | EP | 2237494 A1 | 06-10-2010 |
| | | | WO | 2010112802 A1 | 07-10-2010 |
| US 2011085472 | A1 | 14-04-2011 | US | 2011085472 A1 | 14-04-2011 |
| | | | WO | 2011043824 A1 | 14-04-2011 |
| WO 2006102398 | A2 | 28-09-2006 | AT | 511726 T | 15-06-2011 |
| | | | CN | 101151847 A | 26-03-2008 |
| | | | EP | 1861963 A2 | 05-12-2007 |
| | | | US | 2006215577 A1 | 28-09-2006 |
| | | | WO | 2006102398 A2 | 28-09-2006 |
| US 2011058563 | A1 | 10-03-2011 | EP | 2232808 A2 | 29-09-2010 |
| | | | US | 2011058563 A1 | 10-03-2011 |
| | | | WO | 2009087671 A2 | 16-07-2009 |
| EP 1737168 | A1 | 27-12-2006 | EP | 1737168 A1 | 27-12-2006 |
| | | | US | 2006291446 A1 | 28-12-2006 |
| US 6914886 | B2 | 05-07-2005 | NONE | | |
| US 2013223229 | A1 | 29-08-2013 | EP | 2820886 A1 | 07-01-2015 |
| | | | US | 2013223229 A1 | 29-08-2013 |
| | | | WO | 2013130786 A1 | 06-09-2013 |

EPO FORM P0459

For more details about this annex : see Official Journal of the European Patent Office, No. 12/82